(19) Europäisches Patentamt
European Patent Office
Office européen des brevets

(11) **EP 2 769 770 A2**

(12) **EUROPEAN PATENT APPLICATION**

(43) Date of publication:
**27.08.2014 Bulletin 2014/35**

(51) Int Cl.:
*B05B 7/16* (2006.01)    *B05B 11/00* (2006.01)
*H01R 13/52* (2006.01)    *A47J 27/21* (2006.01)
*B01F 15/06* (2006.01)    *B67D 3/00* (2006.01)

(21) Application number: **14164285.0**

(22) Date of filing: **05.03.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **07.03.2008 GB 0804299
09.10.2008 GB 0818545**

(62) Document number(s) of the earlier application(s) in
accordance with Art. 76 EPC:
**09717154.0 / 2 252 407**

(71) Applicant: **Otter Controls Limited
Buxton Derbyshire SK17 7LF (GB)**

(72) Inventors:
• **White, Ian**
  **Buxton, Derbyshire SK17 9BQ (GB)**

• **Gaeta, Antonio**
  **Buxton, Derbyshire SK17 6RA (GB)**
• **Smith, David**
  **Macclesfield, Cheshire SK10 2UN (GB)**
• **Hadfield, Robert**
  **Stockport, Cheshire SK6 6DF (GB)**
• **Whiteley, Simon**
  **Buxton, Derbyshire SK17 6SG (GB)**

(74) Representative: **Cross, James Peter Archibald
RGC Jenkins & Co.
26 Caxton Street
London SW1H 0RJ (GB)**

Remarks:
This application was filed on 10.04.2014 as a divional
application to the application mentioned under INID
code 62.

(54) **Electrical appliances and components**

(57)    Arrangements are disclosed for sealing and/or retaining a component in a washproof electrical appliance. A heated liquid dispenser is also disclosed.

Fig. 1

EP 2 769 770 A2

## Description

## Field of the Invention

The present invention relates to electrical appliances and components therefor, and particularly, although not exclusively, to cordless domestic appliances.

## Background to the Invention

In a cordless kettle, a water reservoir includes a cordless connector that is operable to cooperate with a corresponding connector on a power base. Thus, when the water reservoir is mounted on the power base, power may be supplied to a heating element located in the kettle jug to allow water therein to be heated.

Such arrangements allow a power base to be connected to a domestic power supply (such as by a plug), whilst further allowing the kettle jug to be removed from the base after the water is heated to allow a user to more easily dispense the water as required.

Further advances on cordless connectors have led to 360° connectors, as described for example in WO 94/06185.

The above types of cordless electrical connectors have also found use on other domestic appliances, such as food processors, blenders and the like. This arrangement provides an advantage that the processed/blended food can be more easily dispensed by a user.

However, as will be appreciated, appliances such as food processors, blenders and, to a lesser extent kettle jugs, need regular cleaning. In particular, cordless appliances for containing food or liquids other than water require cleaning after each use. Such a task is time consuming and may be difficult to perform manually.

Accordingly, it would be desirable to provide an appliance that can be cleaned more easily. In particular, it would be desirable to provide a cordless appliance where the detachable part of the appliance can be washed in a dishwasher, by immersion in water or otherwise easily cleaned. Additionally or alternatively, it would be desirable to provide a discrete component that may be incorporated in such an appliance.

The applicant's patent publication WO 08/012506 A1 discloses a cordless electrical connector having current-carrying components sealed therein, and a washable electrical appliance incorporating such a connector.

One approach to waterproofing an appliance would be to seal the electrical parts into a chamber. However, washing the chamber in a dishwasher will cause approximately a 20% increase in pressure within the chamber, for example when the temperature is raised from 15°C to 75°C. A pressure difference between the chamber and the local environment may also occur if local air pressure is reduced, for example if the appliance is taken to high altitude.

Another problem is that ionisation may occur within the chamber, which cannot be dispelled by ventilation if the chamber is completely sealed.

Patent publication GB-A-2441628 proposes putting a valve in the base of a cordless appliance, which valve opens when the appliance is connected to a cordless power base to allow drainage, but closes when the appliance is removed from the power base, to avoid water ingress during washing.

The applicant's patent publication WO-A-07/096630 discloses a heated liquid dispenser, improvements to which are disclosed in the present application.

## Statements of the Invention

According to one aspect of the invention, there is provided a heated liquid dispenser comprising a liquid heating portion including liquid heating means, a dispensing portion and an intermediate portion removably connectable between the heating portion and the dispensing portion.

According to another aspect of the invention, there is provided a heated liquid dispenser comprising a reservoir, heating means operable to heat the contents of the reservoir, and dispensing means for dispensing the contents of the reservoir, wherein a plurality of different said dispensing means are removably connectable to the reservoir or to the heating means.

According to another aspect of the invention, there is provided a heated liquid dispenser comprising a reservoir, heating means operable to heat the contents of the reservoir, and dispensing means for dispensing the contents of the reservoir, wherein the dispensing means includes a flexible conduit.

According to another aspect of the invention, there is provided a heated liquid dispenser comprising a reservoir, heating means operable to heat the contents of the reservoir, and dispensing means for dispensing the contents of the reservoir, wherein the reservoir is fillable when inverted.

According to another aspect of the invention, there is provided a heated liquid dispenser comprising a reservoir, heating means operable to heat the contents of the reservoir, dispensing means for dispensing the contents of the reservoir, and means for stirring the contents of the reservoir.

According to another aspect of the invention, there is provided a heated liquid dispenser comprising a reservoir, heating means operable to heat the contents of the reservoir, and dispensing means for dispensing the contents of the reservoir, wherein the heating means comprises a heater and a liquid chamber for containing liquid heated by the heater, the liquid chamber being in thermal contact with the reservoir.

According to another aspect of the invention, there is provided a washable electrical appliance, or part thereof, having at least one electrical component sealed within a chamber substantially to prevent the ingress of water into the chamber during washing, wherein the chamber is able to withstand a pressure difference between the inside and the outside of the chamber caused by heating of the chamber associated with washing of the appliance.

According to another aspect of the invention, there is provided a washable electrical appliance, or part thereof, having at least one electrical component sealed within a chamber substantially to prevent the ingress of water into the chamber during washing, wherein the chamber has an internal vacuum.

According to another aspect of the invention, there is provided a washable electrical appliance, or part thereof, having at least one electrical component sealed within a chamber substantially to prevent the ingress of water into the chamber during washing, wherein the interior of the chamber is sealed at a pressure elevated above normal atmospheric pressure.

According to another aspect of the invention, there is provided a washable electrical appliance, or part thereof, having at least one electrical component sealed within a chamber substantially to prevent the ingress of water into the chamber during washing, wherein the volume of the chamber is variable so as to tend to equalise a pressure difference between the interior and the exterior of the chamber.

According to another aspect of the invention, there is provided a washable electrical appliance, or part thereof, having at least one electrical component sealed within a chamber substantially to prevent the ingress of water into the chamber during washing, wherein the chamber includes a membrane arranged to allow ventilation of the chamber while substantially preventing ingress of water during washing.

According to another aspect of the invention, there is provided a washable electrical appliance, or part thereof, having at least one electrical component sealed within a chamber substantially to prevent the ingress of water into the chamber during washing, wherein the chamber includes a valve that seals the chamber during washing of the appliance or part. According to another aspect of the invention, there is provided a heated liquid dispenser having an electrically powered pump and a power supply within the appliance so that the pump is operable when the appliance is disconnected from a cordless power base.

According to another aspect of the invention there is provided a discrete electrical connector component that includes means to ventilate, seal and/or drain the interior of an appliance into which it is fitted.

According to another aspect of the invention there is provided a pair of cordless electrical connector components, respectively for a power base and appliance, that include means to ventilate, seal and/or drain the appliance when coupled together.

According to another aspect of the invention there is provided a heated liquid dispenser having means to equalise pressure caused by heating the reservoir.

According to another aspect of the present invention there is provided a washable electrical appliance having a housing with a discrete component assembled therein, the component being sealed against the housing by a seal compressed in the direction of insertion of the component into the housing.

According to another aspect of the present invention, there is provided a washable electrical appliance having a housing with a discrete component assembled therein and forming part of the external surface of the appliance, the component being sealed against the housing by a seal having one or more elongate portions extending between the component and the housing.

According to another aspect of the invention, there is provided a washable electrical appliance having a housing with a discrete component assembled therein, the component being sealed against the housing by a sealing member that retains the component against the housing.

According to another aspect of the invention, there is provided a washable electrical appliance having a housing with an external discrete component assembled therein and forming part of the external surface of the appliance, and an internal discrete component assembled therein and not forming part of the external surface of the appliance, the external component being sealed against the housing by a sealing member that also provides a seal around the internal component.

According to another aspect of the invention, there is provided a washable electrical appliance comprising a housing, an internal reservoir, an element plate forming at least part of a floor of the reservoir, a base portion forming at least part of an external base of the appliance, and an integral seal arranged both to seal the element plate in the reservoir and to seal the base portion against the housing.

According to another aspect of the invention, there is provided a method of sealing a component within a housing of a washable electrical appliance, the component and the housing having complementary formations that form a sealant channel when assembled together, the method comprising introducing sealant into the sealant channel and setting the sealant so as to form a seal between the housing and the component.

According to another aspect of the invention, there is provided a method of assembling a washable electrical appliance, comprising assembling and sealing together a discrete internal component and a discrete external component together with a housing of the appliance by means of a common sealant portion.

According to another aspect of the invention, there is provided a washable electrical appliance having a main housing and a discretely formed housing component attached to the main housing, wherein end surfaces of the main housing and the housing component are mutually abutting and an internal portion of one of the housing component and the main housing extends into the other one of the housing component and the main housing and seals against the other one of the housing component and the main housing.

According to another aspect of the invention, there is provided a washable electrical appliance having a main housing and a discretely formed housing component attached to the main housing, wherein edge portions of the main housing and the housing component comprise serrations engaged with one another.

According to another aspect of the invention, there is provided a method of assembling a component into a housing of a washable electrical appliance, the component and the housing having complementary formations, the method comprising welding said complementary formations together.

As will be appreciated, the above described arrangements overcome problems associated with the prior art by allowing an appliance comprising a cordless electrical connection to be easily cleaned, for example by putting the appliance in a dishwasher.

**Brief Description of the Drawings**

Specific embodiments of the invention will now be described with reference to the accompanying drawings, a brief synopsis of which is set out below.

Figure 1 is an axial cross-section of a cordless connector sealed in an appliance housing, in a first embodiment of the invention.

Figures 1a to 1e show alternative embodiments to that of Figure 1, comprising alternative sealing arrangements.

Figure 2 is an axial cross-section of a cordless connector sealed in an appliance housing, in a second embodiment of the invention.

Figure 3 is an axial cross-section of a cordless connector sealed in an appliance housing, in a third embodiment of the invention.

Figure 4 is an axial cross-section of a cordless connector sealed in an appliance housing, in a fourth embodiment of the invention.

Figures 5a to 5c are axial cross-sections of a cordless connector sealed in an appliance housing, in variants of a fifth embodiment of the invention.

Figure 6 is an axial cross-section of a cordless connector sealed in an appliance housing, in a sixth embodiment of the invention.

Figure 7 is an axial cross-section of a cordless connector sealed in an appliance housing, in a seventh embodiment of the invention.

Figure 8 is an axial cross-section of a cordless connector sealed in an appliance housing, in an eighth embodiment of the invention.

Figure 9 is an axial cross-section of a cordless connector in the process of being sealed in an appliance housing, in a ninth embodiment of the invention.

Figure 10 is an axial cross-section of a cordless connector sealed in an appliance housing, in a tenth embodiment of the invention.

Figure 11a is an axial cross-section of a cordless connector sealed in an appliance housing, in an eleventh embodiment of the invention.

Figure 11b is a perspective view of a part of the appliance housing of the eleventh embodiment.

Figure 12 is an axial cross-section of a cordless connector sealed in an appliance housing, in a twelfth embodiment of the invention.

Figure 13a is an axial cross-section of a cordless connector sealed in an appliance housing, in a thirteenth embodiment of the invention.

Figure 13b is a perspective view of a securing ring for use in the thirteenth embodiment.

Figure 14 is an axial cross-section of a cordless connector sealed in an appliance housing, in a fourteenth embodiment of the invention.

Figure 15a is an axial cross-section of a cordless connector sealed in an appliance housing, in a fifteenth embodiment of the invention.

Figure 15b is an axial cross-section of a cordless connector in the process of being sealed in an appliance housing, in a variant of the fifteenth embodiment of the invention.

Figure 16 is a perspective view of a cordless connector being sealed in an appliance housing, in a sixteenth embodiment of the invention.

Figure 17 is an axial cross-section of a cordless connector sealed in an appliance housing, in a variant of the above embodiments.

Figure 18 is a cross-section of a base component sealed against an appliance side wall, in an eighteenth embodiment.

Figure 19 is a cross-section of a base component and an element plate sealed against an appliance side wall, in a nineteenth embodiment.

Figure 20 is a cross-section of a base component and an element plate sealed against an appliance side wall, in a twentieth embodiment.

Figure 21 is a cross-section of a base component sealed against an appliance side wall, in a twenty-first embodiment.

Figure 22a is a cross-section of a base component sealed against an appliance side wall, in a twenty-second embodiment.

Figure 22b is a cross-section in the plane A-A of Figure 22a.

Figure 23 is a cross-section of a base component and an element plate sealed against an appliance side wall, in a twenty-third embodiment.

Figure 24 is a cross-section of a base component in a method of sealing against an appliance side wall, in a twenty-fourth embodiment.

Figure 25 is a cross-section of a base component sealed against an appliance side wall, in a twenty-fifth embodiment.

Figure 26 is a cross-section of a base component and an element plate sealed against an appliance side wall, in a twenty-sixth embodiment.

Figure 27a is a cross-section of an appliance side wall and a base component for attachment thereto, in a twenty-seventh embodiment.

Figure 27b is a cross-section of an end portion of the base component, in a variant of the twenty-seventh embodiment.

Figures 28a and 28b are perspective views from different azimuthal angles of a base component according to a twenty-eighth embodiment.

Figure 29 shows a diagrammatic representation of a first prior art example of a heated liquid dispenser.

Figure 30 shows a cut-away of the reservoir and the dispensing means of the example of Figure 29.

Figure 31 shows a second prior art example of a heated liquid dispenser.

Figure 32 shows a top view of a suitable heating element temperature control for use in the first and second prior art examples.

Figures 33 to 35 show different embodiments of a heated liquid dispenser comprising at least three separate portions.

Figure 36 shows an interchangeable dispensing part for connection to a heating portion.

Figures 37 and 38 show alternative dispensing portions.

Figure 39 shows a reservoir for inverted filling.

Figure 40 shows a heated liquid dispenser with an integral powered stirrer.

Figure 41 shows a heated liquid dispenser with an integral manual stirrer.

Figure 42 shows a heated liquid dispenser with a refill during assembly, and when assembled.

Figure 43 shows a heated liquid dispenser with a reservoir having an inner and outer chamber.

Figure 44 is a cross-section in the plane A-A of Figure 43.

Figure 45 shows the inner chamber removed from the outer chamber.

## Detailed Description of Embodiments

In the description of the embodiments, similar or analogous parts are identified by the same reference numerals between the different embodiments.

## First Embodiment

The first embodiment is described in relation to a modified version of the applicant's CP8 Series 360° waterproof cordless electrical connector. This embodiment can be supplied as a discrete component for fitting to any of a wide range of domestic electrical appliances designed to accommodate the connector. However, embodiments of the invention may also be applied to cordless electrical connectors that are integrated with a control such as a boil detector and/or dry boil control, such as in the applicant's A1 integrated control. The control may be an electromechanical or electronic control.

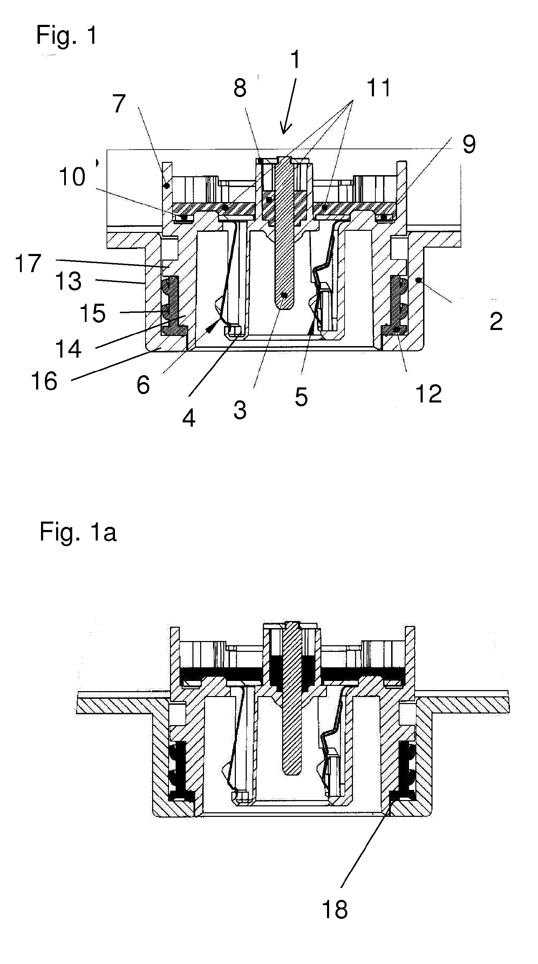

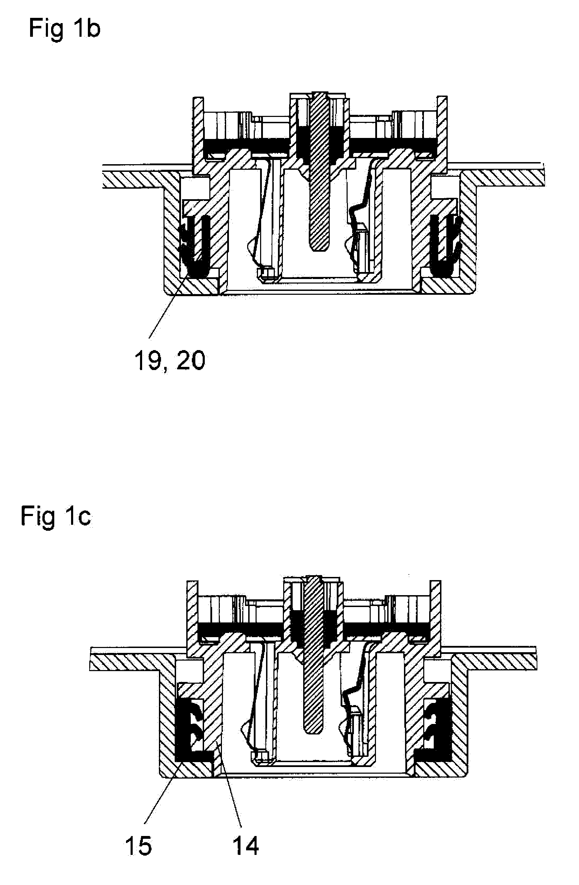

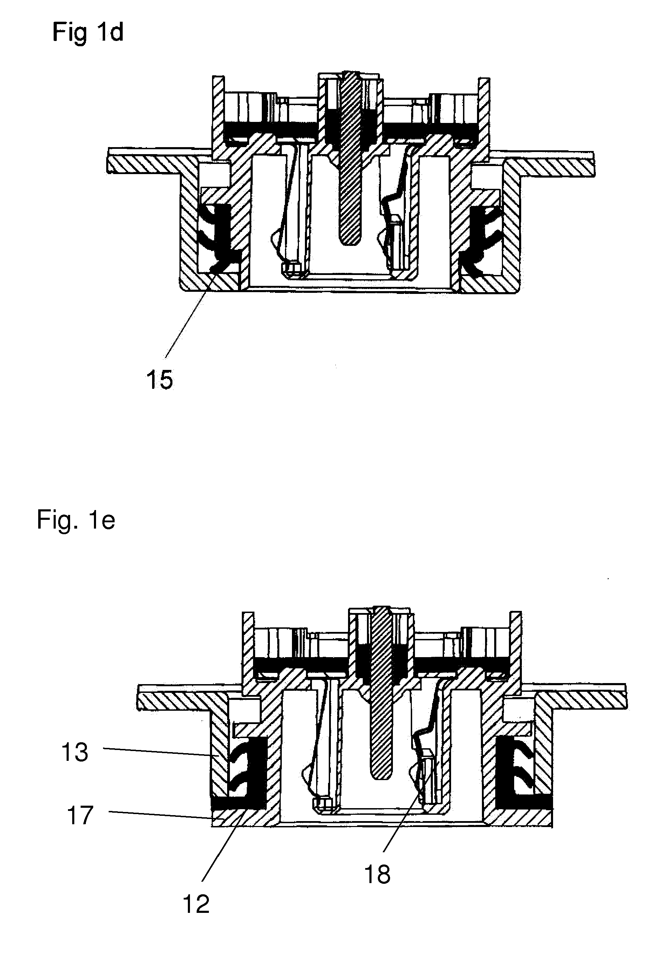

Figure 1 shows an embodiment of the connector 1 fitted into an approximately cylindrical recess in an electrical appliance housing 2. The corresponding CS7 connector is fitted to a power base. Power may then be supplied to the electrical appliance by mounting the appliance onto the power base. It is preferred that a residual current protector is provided in either the appliance or the corresponding power base.

The electrical connector 1 comprises an upper end, and a lower end defined by an aperture into which the corresponding CS7 electrical connector fits. Earth pin 3 is formed in the centre of the aperture; an inner ring member 4 is formed in the aperture; a live contact spring 5 is formed on the inner surface of the inner ring member 4, and a neutral contact spring 6 is formed on the outer surface of the inner ring member 4.

The upper end of the connector 1 comprises an upper wall 7, within which are located an earth connector 8, a live connector 9 and a neutral connector 10, connected respectively to the earth pin 3, live contact spring 5 and neutral contact spring 6, and arranged for connection to power circuitry within the appliance 2. The earth connector 8, live connector 9 and neutral connector 10 are sealed within the upper wall 7 by liquid-tight seals 11, arranged to prevent ingress of water from the lower end of the connector.

The electrical connection terminals 3, 5 and 6 may be coated with an electrically conductive, relatively inert material, such as gold or silver plate, so as to reduce or overcome potential corrosion and/or galvanic reaction problems.

It will be appreciated that the present invention is not limited to such arrangements, and that more or fewer connectors could be provided. For example, in some arrangements the controls for the appliance may be housed in the power base, with sensors or other components being housed in the appliance proper. In these arrangements it may be necessary to provide additional contacts in the connector system to allow control or other signals to be passed between the appliance proper and the power base control system. Particulars of such a control arrangement may be found in GB-A-2228634.

Further details of the CP83 connector are disclosed in WO 08/012506 A1 and will not be repeated herein. However, in the first embodiment the connector 1 is sealed within an aperture in the housing 2 by means of a seal 12, arranged between a housing side wall 13 and a connector side wall 14. The first to eighth embodiments relate to various different sealing arrangements of this type.

In the first embodiment, the seal 12 includes one or more relatively thin resilient radially extending circumferential fingers or fins 15 which extend between the housing side wall 13 and the connector side wall 14. The fingers or fins deform to take the shape of the wall against which they are fitted and allow a wide tolerance in the shape and dimensions of the space between the housing side wall 13 and the connector side wall 14. The seal 12 is retained in the axial direction between an inwardly projecting lip 16 at the lower end of the housing side wall 13 and an outwardly projecting rim 17 on the connector side wall. The side walls 13 and 14 are preferably dimensioned with sufficiently small tolerances to prevent angular movement between the connector and the base. The lower end of the connector side wall 14 includes a portion of narrower outer diameter, into which an inwardly projecting portion of the seal 12 fits. The lower end of the seal 12 abuts the upper surface of the lip 16, which helps seal the void between the side walls 14 and 16.

Figure 1a shows a variant of the first embodiment, in which the lower end of the seal 12 includes one or more axially projecting and radially spaced fingers or fins 18 which contact the upper surface of the lip 16.

Figure 1b shows another variant of the first embodiment, in which the connector side wall 14 includes an axially extending channel 19, and the seal 12 includes a complementary portion 20 that extends into the channel 19; hence, the seal 12 is U-shaped in cross-section.

Figure 1c shows another variant of the first embodiment, in which the fingers 15 extend radially inwardly into contact with the connector side wall 14. Figure Id shows another variant of the first embodiment, in which the seal 12 has a similar to arrangement to that of

Figure 1a, but with an additional finger 15 arranged at an angle to allow additional tolerance in the axial direction. The additional finger reduces the quantity of water that may be trapped within the seal.

The connectors 1 of Figures 1 to Id are arranged to be inserted into the housing 2 from above (i.e. from within the housing 2) during assembly. Figure 1e shows an alternative embodiment in which the connector 1 is arranged to be inserted from below (i.e. from outside the housing 2) during assembly. In this embodiment, the rim 17 is at the lower end of the connector 1, and extends radially beyond the inner surface of the side wall 13. A portion of the seal 12 fits between the lower end of the side wall 13 and the rim 17, so as to seal the join between the connector 1 and the housing 2. The alternative seal configurations of Figures 1 to Id may be applied to the alternative rim configuration of Figure 1e.

### Second Embodiment

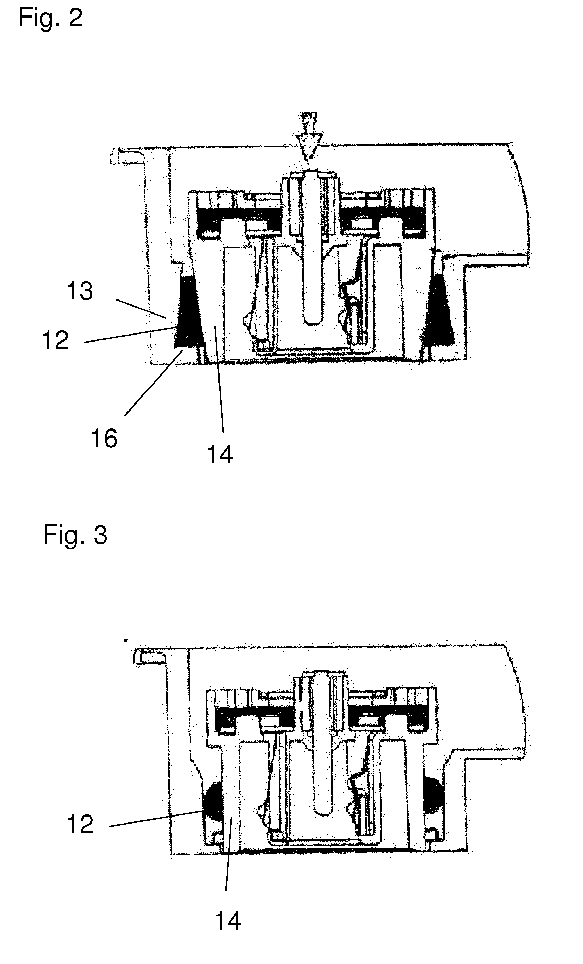

Figure 2 shows a second embodiment of the invention, similar to the first embodiment except that the seal 12 is wedge-shaped in cross section, tapering in an upward axial direction, and the housing side wall 13 and/or the connector side wall 14 taper in a downward axial direction such that the space therebetween increases in the downward axial direction. The lower end of the seal 12 abuts against the upward face of the lip 16, but the rim 17 is absent. The seal 12 is compressed by forcing the connector downwardly into the housing side wall 13, as shown by the downward arrow.

### Third Embodiment

Figure 3 shows a third embodiment of the invention, which differs from the first embodiment in that the seal 12 is a twin shot seal, in which the seal material is moulded into the connector side wall 14 by a second injection stage during the process of manufacture. In this embodiment, the seal 12 extends radially, but alternatively the seal may extend axially, for example from rim 17 to lip 16. The twin shot manufacturing method may also be applied to other seal shapes and configurations.

## Fourth Embodiment

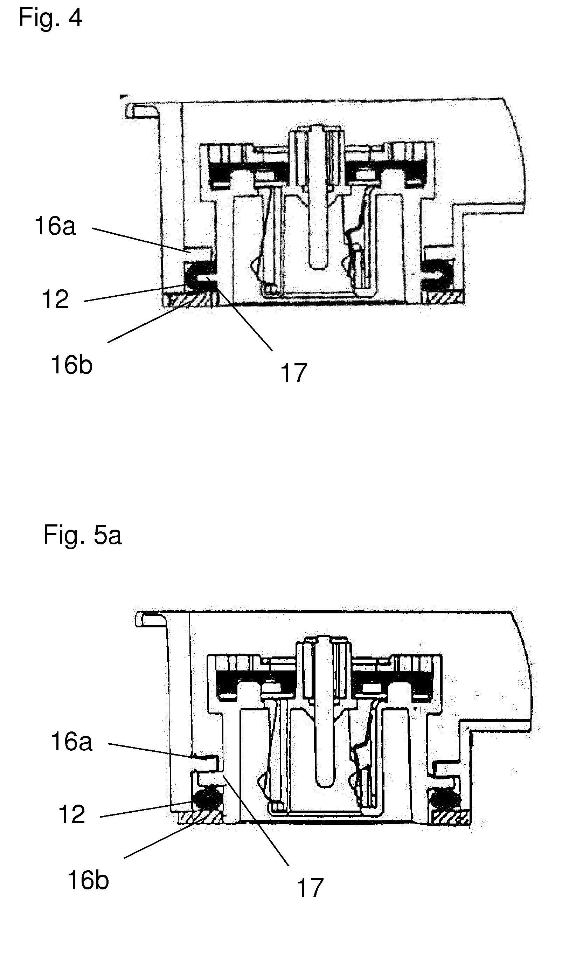

Figure 4 shows a fourth embodiment, in which the seal 12 is U-shaped in cross-section and arranged around the rim 17. The seal 12 is compressed between an upper lip 16a and a lower lip 16b, the latter being attached to the lower end of the housing side wall 13 after assembly of the connector 1 within the housing 2.

## Fifth Embodiment

Figure 5a shows a fifth embodiment, in which the seal 12 is an o-ring compressed axially between the rim 17 and the lower lip 16b, in order to seal radially between the housing side wall 13 and the connector side wall 14. The rim 17 abuts against the upper lip 16a.

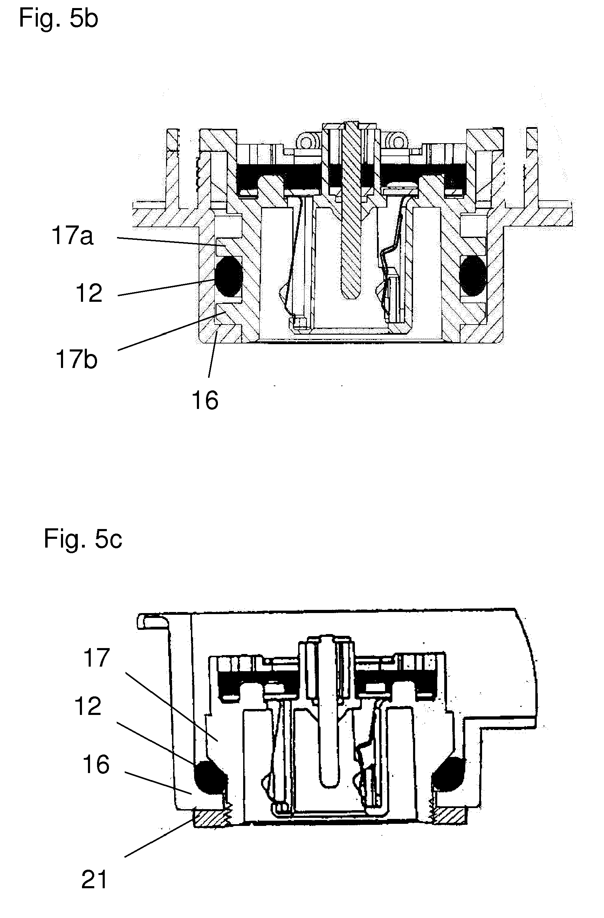

Figure 5b shows a variant of the fifth embodiment, in which the seal 12 is compressed axially between upper and lower rims 17a, 17b; the lower rim 17b abuts against the lip 16.

Figure 5c shows another variant of the fifth embodiment, in which the seal 12 is compressed at an angle to the axial and radial directions, and is located against a chamfered surface of the rim 17 and the internal corner between the lip 16 and the housing side wall 13. The lip 16 is compressed against the seal by a securing ring 21 coupled to the connector side wall 14, for example by a screw thread or another axially loaded retention method.

The embodiments of Figures 5a and 5b may incorporate high resilience sprung loaded axial and radial seals which facilitate wider tolerances; for example the NAA mark 1 axial seal or NAE mark 1 external pressure face seal as manufactured by Advanced Products.

## Sixth Embodiment

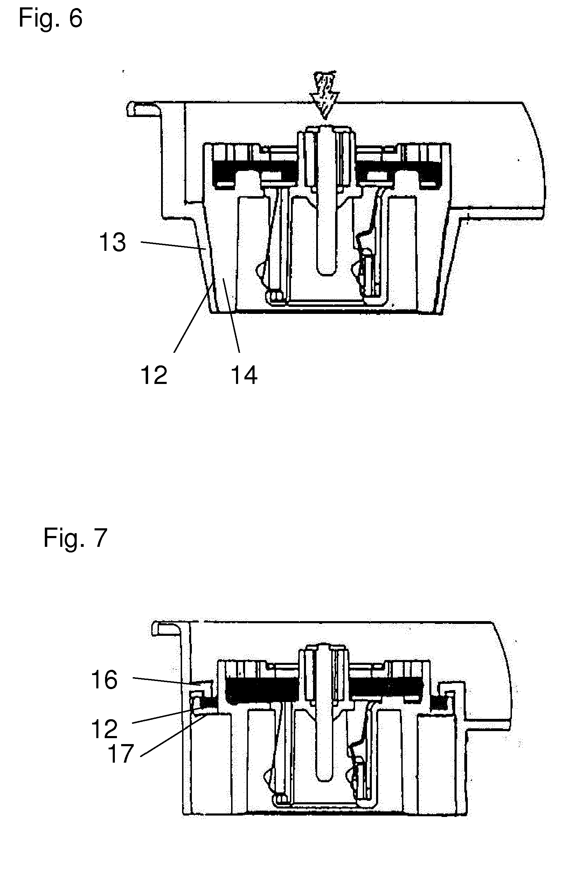

Figure 6 shows a sixth embodiment that is similar to the second embodiment, except that the housing side wall 13 is tapered and converges in the downward axial direction, and is substantially parallel to the connector side wall 13. A seal 12 of substantially constant thickness may be provided between the side walls 13, 14; the seal 12 may be a twin shot, membrane or silicone seal or glue, or there may be an interference/force fit between the side walls 13, 14, without glue or a seal.

## Seventh Embodiment

Figure 7 shows a seventh embodiment, in which the rim 17 forms an axially extending channel that opens in the upward direction. A complementary downward projection on the lip 16 fits within the channel. During assembly, the channel is at least partially filled with liquid sealant, and the lip is fitted therein. The sealant is allowed to set, so as to form the seal 12 between the lip 16 and the rim 17. Alternatively the sealant may be applied and allowed to set prior to assembly of the connector 1 into the housing 2, such that the seal 12 is integral with the connector 1 prior to assembly.

## Eighth to Sixteenth Embodiments

The eighth to sixteenth embodiments described below relate to various methods of retaining the connector 1 within the housing 2. In the eight to tenth embodiments the retention method has a joint function that may also be used to seal. The eleventh to sixteenth embodiments also show specific sealing methods, but any of the retention methods may be combined with any of the sealing methods, except where they are clearly incompatible.

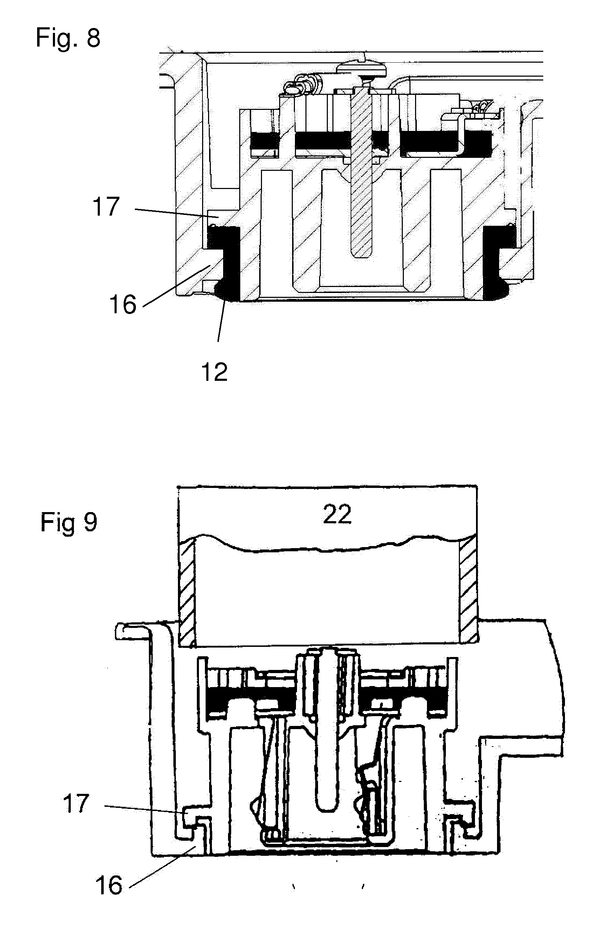

Figure 8 shows an eighth embodiment, in which the seal 12 comprises a Nulox™ bush, which is a grommet seal designed to seal and retain by compression and resultant expansion and friction, retained under the rim 17, and sealing around the lip 16.

Figure 9 illustrates a retention method according to the ninth embodiment, in which the lip 16 and rim 17 are welded together. The welding technique may be for example hot air such as PHASA, ultrasonic, induction, laser, friction, hot stake or hotplate welding. In Figure 9, ultrasonic welding is illustrated by the use of a sonotrode 22.

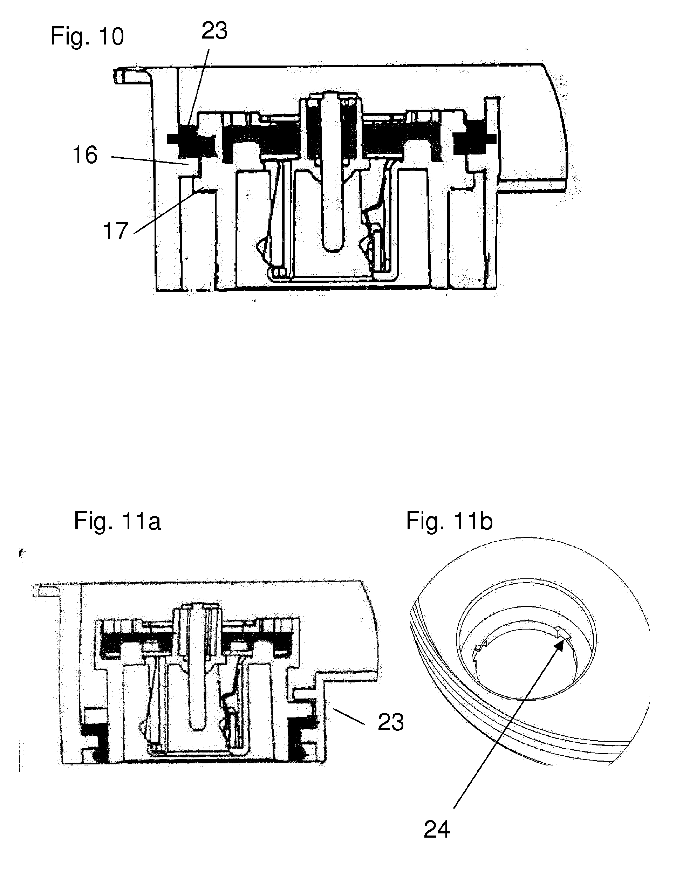

Figure 10 illustrates a retention method according to the tenth embodiment, in which the upper wall 7 and the radially opposite portion of the housing side wall 13 each includes a radial recess. The lip 16 abuts the rim so as to form an upwardly facing axial channel 23 into which liquid sealant is introduced. When the sealant sets, it forms the seal 12 which also retains the connector 1 within the housing 2, by virtue of the setting of the sealant within the radial recesses.

Figures 11a and 11b illustrate a retention mechanism according to an eleventh embodiment. A bayonet fitting between the connector 1 and the housing 2 comprises projections 23 extending radially outwardly from the connector side wall 14 and arranged to fit within recesses 24 in the housing side wall 13, and to lock within the recesses 24 by relative rotation between the connector 1 and the housing 2. The bayonet depth and angle may be arranged to apply axial compression for the seal and/or a downward or upward force to assist locking of the retention mechanism. The bayonet may take the form of a helical thread.

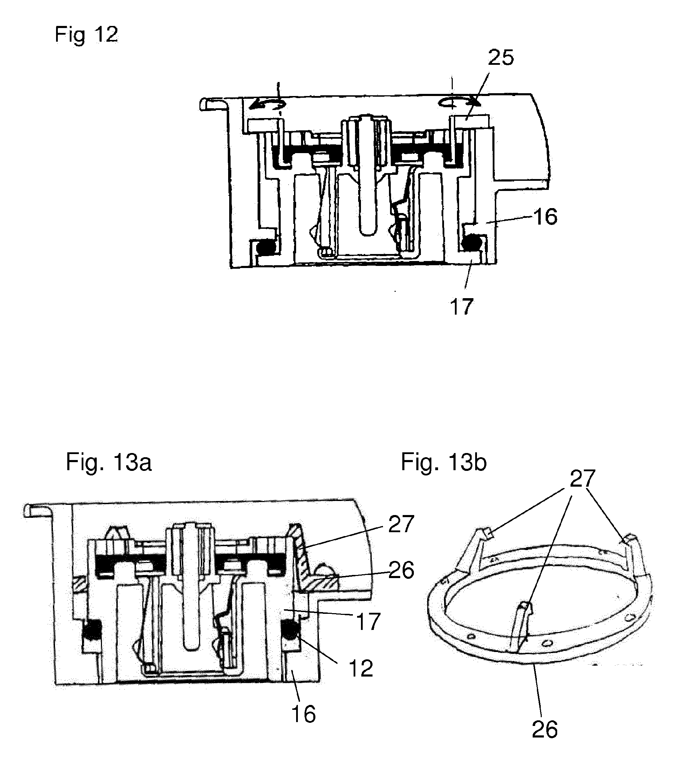

Figure 12 illustrates a retention mechanism according to a twelfth embodiment, in which a plurality of rotatable tabs 25 on the upper end of the upper wall 17 are rotated so as to extend radially outwardly to engage a portion of the housing 2 once the connector 1 is positioned within the housing 2.

Figures 13a and 13b illustrate a retention mechanism according to a thirteenth embodiment, in which a securing ring 26, having a plurality of circumferentially spaced resilient locking fingers 27, is fastened around the upper rim of the recess in the housing 2. The fingers 27 engage the upper wall 7 so as to compress the seal 12 in an axial direction between the rim 17 and the lip 16.

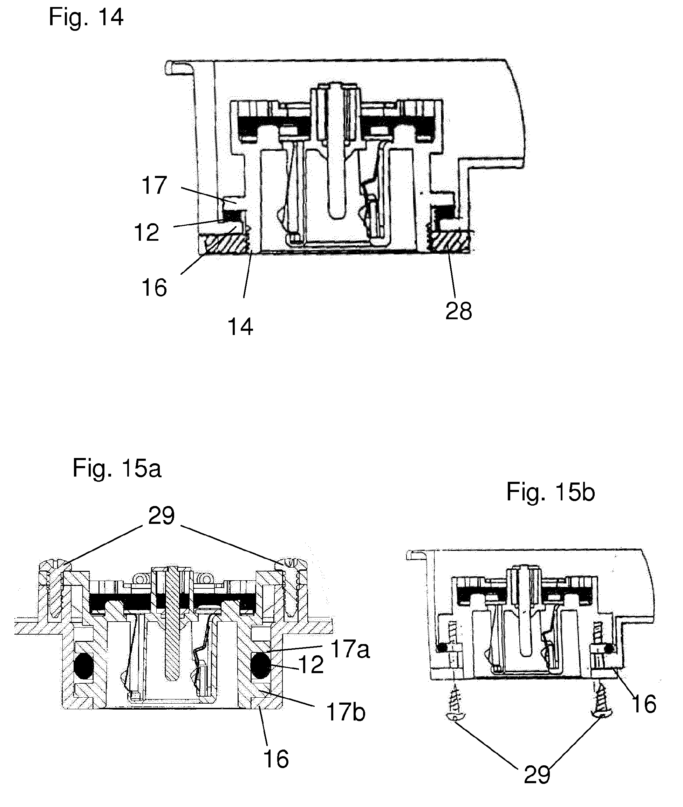

Figure 14 illustrates a retention mechanism according to a fourteenth embodiment, in which the seal 12 is compressed in an axial direction between the rim 17 and the lip 16 by means of a threaded locking ring 28 that engages a screw thread on the connector side wall 14. The connector 1 is assembled with the housing 2, and the locking ring 28 is then screwed onto the connector 1 from outside the housing 2. Alternative means of axially compressing the seal 12 may be provided.

Figures 15a and 15b show two alternative retention mechanisms of a fifteenth embodiment. In the alternative of Fig. 15a, the upper wall 7 is attached to the housing 2 by means of screws 29 attached from above (i.e. from within the housing). In the alternative of Figure 15b, screw recesses are provided facing downward from the connector side wall 14, and screws are attached from below (i.e. from outside the housing 2) so as to retain the connector 1 against the lip 16.

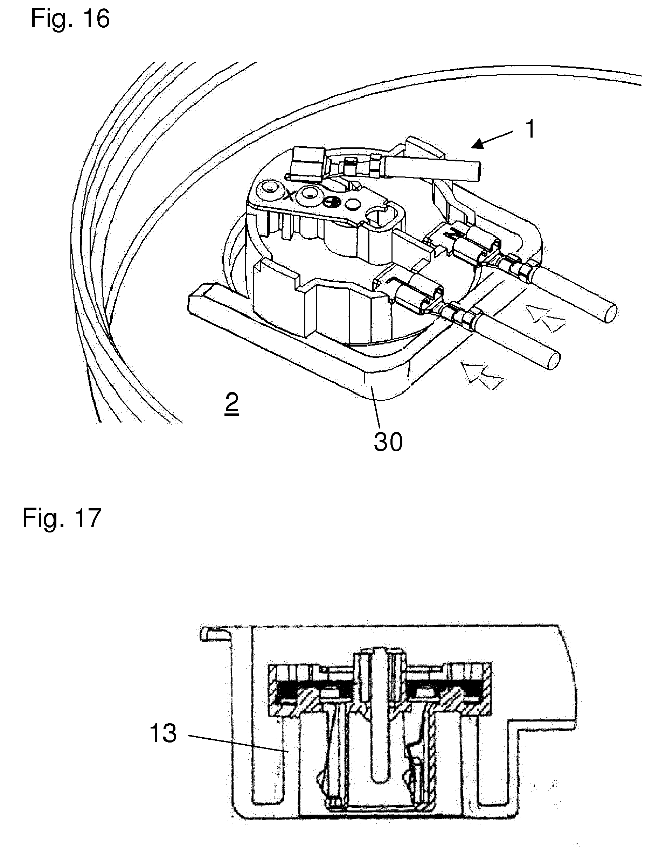

Figure 16 shows a retention mechanism according to a sixteenth embodiment, in which a clip 30 engages portions of the connector 1 and the housing 2 so as the secure the two together. In the example shown, the clip 30 is open at one side and is c-shaped, so that it can be slid in a horizontal direction as shown by the arrows, to engage the portions of the connector 1 and the housing 2.

Seventeenth Embodiment

Figure 17 shows a variant that may be applied to compatible ones of the preceding embodiments, in which the connector side wall 14 is not present, but instead the connector 1 is attached directly to the housing side wall 13. Hence, the internal wall of the connector 1 is formed as part of the housing 2 rather than of the connector 1.

Additional Features

The seal 12 may comprise a two-part RTV (room temperature vulcanisation) silicone, such as RT772 with a T77 catalyst provided by Wacker Silicones, Wacker-Chemie GmbH, Hanns-Seidel-Platz 4, D-81737 München DE (www.wacker.com). The seal may be formed as a discrete silicone rubber or other elastomer seal.

Preferably, components may be selected for resistance to water ingress, for example as described in EP-A-1312290 or GB-A-2334822.

In a preferred arrangement the connector 1 may incorporate one or more drainage holes. Typically, when an appliance is washed in a dishwasher it is placed therein upside down. Accordingly, the lower end of the connector 1 may fill with water during the washing process. The incorporation of drainage holes allows water that would otherwise be collected in the connector 1 to drain away.

In all embodiments it is preferred that there is provided a removable sealing plug operable to cooperate with a portion of the cordless electrical connector 1. The plug preferably fits within the aperture of the connector 1 to prevent water collecting therein during washing. In some embodiments the plug may be connected to the appliance. However, it is equally preferred that the plug is provided as a separate integer. As an alternative to the plug, there may be provided other means to close the aperture of the electrical connector, such as a shutter or sliding cover.

The first to seventeenth embodiments have been described above with reference to the assembly of an electrical connector 1 within an appliance housing 2. However, it will be appreciated that aspects of the sealing and/or retention mechanisms may be applied to the assembly of other components within an appliance housing. In one alternative, the component may be a housing base that is attached to a housing side wall during manufacture, such as a kettle base that is formed as a discrete component and attached to a kettle side wall during manufacture. The side wall may be of polypropylene, stainless steel or glass, for example. The following embodiments show, purely by way of example, how sealing and/or retention mechanisms may be applied to a base component.

Eighteenth Embodiment

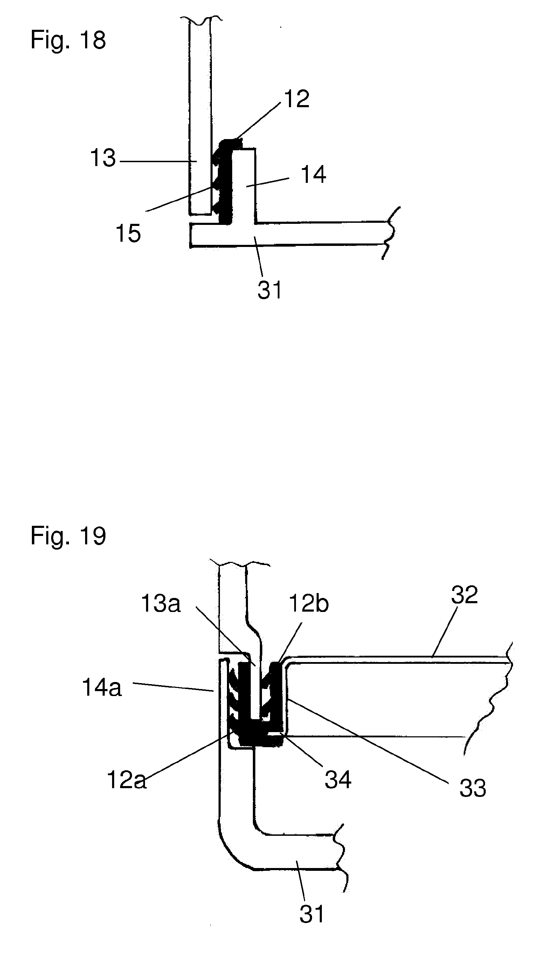

In the eighteenth embodiment shown in Figure 18, a base component 31 extending generally horizontally in use has a substantially perpendicular side wall 14, radially inset from the edge of the base component 31. The side wall 14 carries an annular seal 12 which seals against a side wall 13 of the appliance. The seal may have one or more axially spaced circumferential fingers or fins 15 that extend between the side walls 13 and 14 so as to seal them.

Nineteenth Embodiment

In the nineteenth embodiment shown in Figure 19, the side wall 14 is arranged at the outer edge of the base component 31, and has a narrowed upper end portions 14a that fits outside a narrowed lower end portion 13a of the side wall 14. An outer seal portion 12a seals between the end portions 13a, 14a.

In this embodiment, the appliance includes a heated element plate 32 which forms all or part of a floor of a liquid heating reservoir; the element plate 32 may have a thick film, sheathed element or other heater formed on the underside thereof. The element plate 32 has a substantially perpendicular peripheral flange 33, from which a circumferential projection 34 extends in an outward radial direction. An inner seal portion 12b includes a circumferential groove which fits over the projection 34. The inner seal portion 12b forms a seal between the flange 33 and the side wall 13.

Preferably, the outer seal portion 12a and/or the inner seal portion 12b comprise one or more axially spaced circumferential fingers or fins 15, substantially as in one or more of the previous embodiments.

Preferably, the outer seal portion 12a and the inner seal portion 12b are integrally formed, such that a single seal 12 performs a sealing function both internally of the appliance, for the reservoir, and externally of the appliance, to prevent liquid ingress between the base component 31 and the appliance side wall 13.

**Twentieth Embodiment**

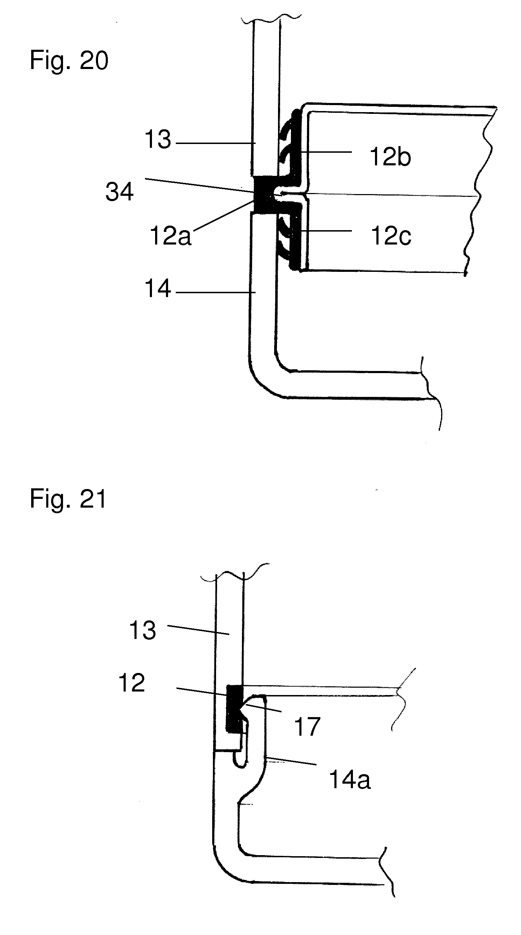

The twentieth embodiment shown in Figure 20 performs both the sealing functions of the nineteenth embodiment, using an alternative configuration. In this embodiment, the side walls 13 and 14 are in a vertically abutting arrangement with an outer seal portion 12a providing a seal therebetween. The projection 34 is formed at an intermediate part of the flange 34, for example as a seam or fold during manufacture of the element plate 32. The inner seal portions 12b is arranged above the projection 34. An optional further seal portion 12c may be arranged below the projection, but this may be omitted provided that some portion of the seal fits around the projection 34.

**Twenty-first Embodiment**

In the twenty-first embodiment shown in Fig. 21, the seal 12 is located within a circumferential recess in the inner surface of the side wall 13, for example by the twin shot process. A rim 17 is arranged on a portion 14a of the side wall 14, that extends upwards within and beyond the lower edge of the side wall 13. The portion 14a has a degree of resilience such as to exert a radially outward force on rim 17 against the seal 12. An upper end of the side wall 14 abuts the lower end of the side wall 13 so that their outer surfaces are substantially flush.

**Twenty-second Embodiment**

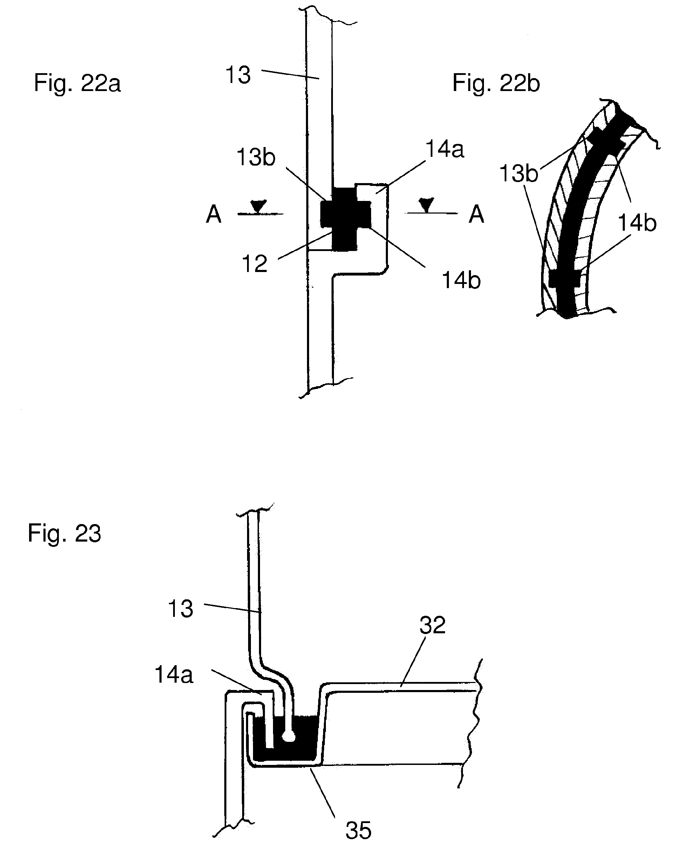

In the twenty-second embodiment shown in Figures 22a and 22b, the side wall has a portion 14a that extends upwards within and beyond the lower edge of the side wall 13 so as to form an upwardly facing circumferential channel between the side wall 13 and the portion 14a when the base portion is assembled onto the appliance. Sealant, such as glue or elastomer, is then introduced into the channel so as to form the seal 12. As an alternative, the seal 12 may be preformed to fit within the channel, and the base component 31 may be push-fitted onto the side wall 13.

The surfaces of the side walls 13 and 14 that face into the channel include respective recesses 13b and 14b into which the sealant flows and sets, to provide retention of the base component 31 to the side wall 13. The recesses 13b, 14b are disposed circumferentially, and may be continuous recesses or discrete indentations as shown in Figure 22b.

**Twenty-third Embodiment**

In the twenty-third embodiment shown in Figure 23, an element plate 32 has a peripheral circumferential channel 35 that opens upwardly. The side wall 14 includes a portion 14a that, when assembled, extends over the outer edge of the element plate 32 into the channel 35. The lower end of the side wall 13, which may be of glass in this embodiment, is also inserted into the channel 35, into which sealant is then introduced. The sealant sets and forms a seal between the element plate 32, the side wall 13 and the base component 31. The sealant may be glue or elastomer, for example.

**Twenty-fourth Embodiment**

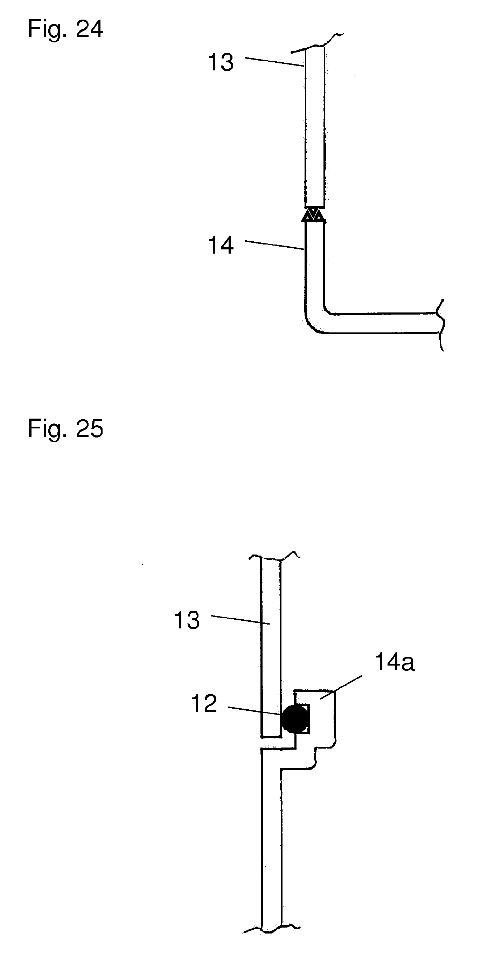

In the twenty-fourth embodiment shown in Figure 24, the side walls 13 and 14 are placed with their ends in abutting relationship and welded together, for example using any one of the welding techniques described in the ninth embodiment. Preferably, the end of the side wall 13 and/or 14 includes one or more projections, to assist formation of a strong and fluid-tight weld.

**Twenty-fifth Embodiment**

In the twenty-fifth embodiment shown in Figure 25, a portion 14a of the side wall 14, that extends upwards within and beyond the lower edge of the side wall 13 when assembled. The portion 14 has a circumferential recess that faces towards the side wall 13, and carries the seal 12, which provides a seal against the side wall 13. The seal 12 is an O-ring in this embodiment, but could be a twin-shot seal formed within the recess, or another form of seal such as described above. The inner surface of the side wall may include a lip 16 (not shown) that projects towards the seal 12 so as to increase the pressure thereon.

**Twenty-sixth Embodiment**

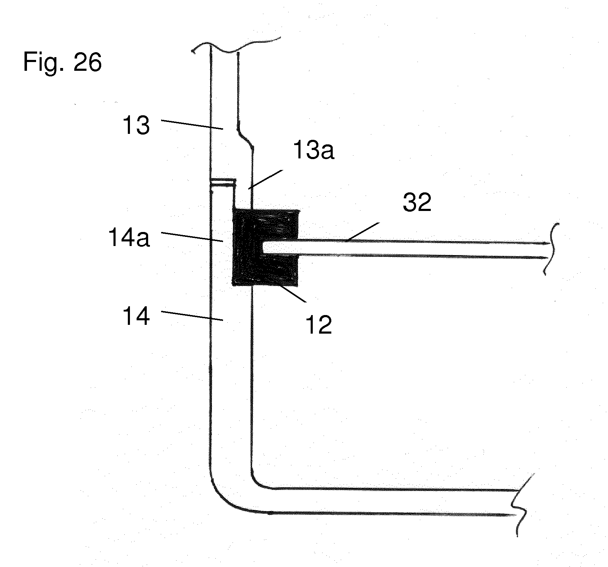

In the twenty-sixth embodiment shown in Figure 26, a grommet seal 12 is retained between end portions 13a and 14a of the respective side wall 13 and 14. The edge of an element plate 32 is sealed within the grommet seal 12, which therefore provides a seal between the side wall 13, the base component 31 and the element plate 32. This embodiment is particularly suitable for thick film element plates, which are preferably substantially planar for ease of manufacture.

**Twenty-seventh Embodiment**

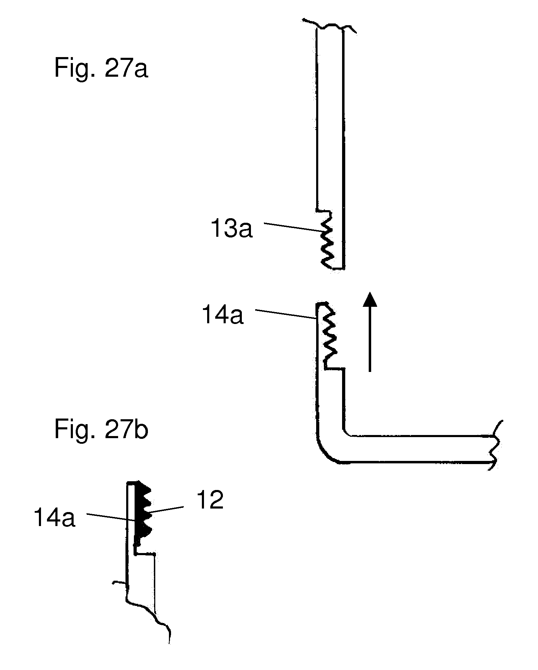

In the twenty-seventh embodiment shown in Figure 27a, the lower end 13a of the side wall 13, and the upper end 14a of the side wall 14, carry circumferentially extending serrations arranged to mutually engage and act as a retention mechanism when the base component 31 is push-fitted onto the side wall. Optionally, as shown in the Figure 27b, one of the end portions may carry a seal 12 arranged to engage and seal against the other end portion. The seal 12 is preferably a twin-shot seal.

## Combinations

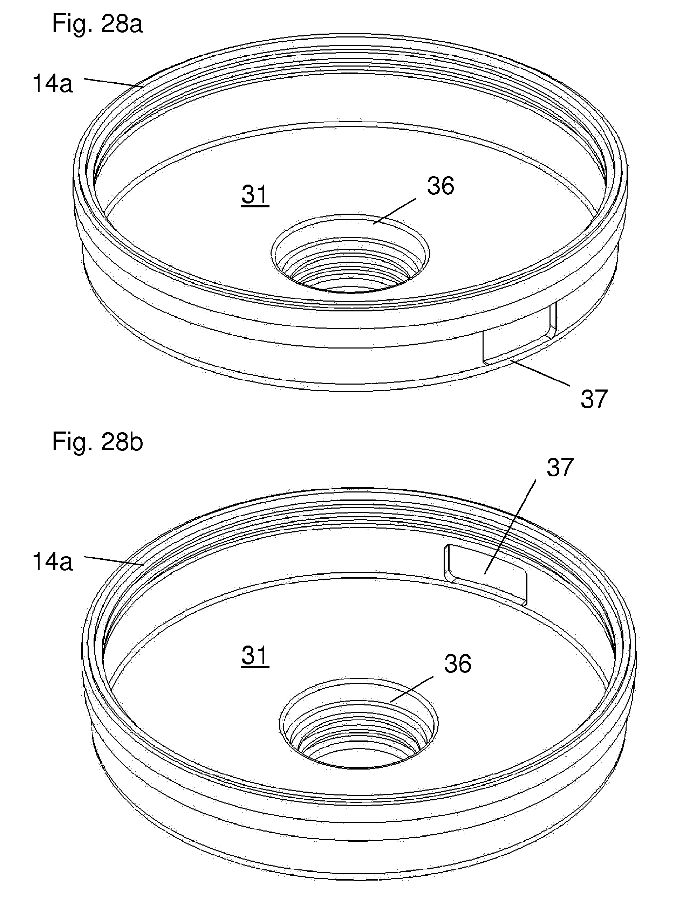

The base component 31 of the eighteenth to twenty-seventh embodiments may further be arranged to receive a connector 1, for example according to any of the first to seventeenth embodiments. By way of example, Figure 28a and 28b show a base component 31 having an end portion 14a according to the twenty-seventh embodiment, and a central recess 36 for retention and/or sealing of the electrical connector 1.

## Sealing

Additional means may be provided to assist in sealing an appliance against liquid ingress during washing. For example, the base component 31 shown in Figures 28a and 28b includes an aperture 37 for a user-actuable switch. The switch may be sealed within the aperture 37 by a flexible membrane that allows the user to operate the switch through the membrane but prevent the ingress of water during washing.

A membrane may be provided to seal moving parts within the connector 1 or the base component 31. For example, in a mechanism in which a moving part such as a push rod is used to actuate a switch, the push rod may press against a membrane to actuate another part on the other side of the membrane. Possible applications include a lift-off switch-off mechanism in the electrical connector 1, a manual reset mechanism, a boil detector, a dry boil detector, or a user control.

Alternatively, a moving part outside the sealed area of the appliance may actuate a part within the sealed area by means of a magnetic link or a magnetically actuated switch.

Internal components may be sealed within a cover or enclosure applied before or during assembly. For example, a cover may be push-fitted or otherwise attached over a component. Alternatively, an expandable cover or enclosure may be shrunk onto a component; the cover or enclosure may be resilient, like a balloon, or shrinkable, such as by heat shrinking. A foamed sealant may be introduced into the base component after assembly, to provide additional sealing and/or noise reduction. Alternatively, a foam rubber seal may be preformed and located within the base component during assembly.

A pressure difference from the surroundings may occur if the internal components are completely sealed within a chamber or enclosure. According to the ideal gas law,

$$P \propto T/V$$

where P = pressure, V = volume & T = temperature (in Kelvin)

So for constant volume:

$$P \propto T$$

If an appliance with a sealed chamber is heated in a dishwasher from 15°C to 75°C (288K to 348K), the increase in pressure within the sealed chamber is (348-288) / 288 = 20.8% so that the pressure increases for example from 1 bar to 1.208 bar; this has been confirmed experimentally. Alternatively, if the volume of the chamber is allowed to increase and the pressure remains equalised with the atmosphere, a 20% increase in volume would be required when the temperature is raised from 15°C to 75°C to maintain the same pressure constant (1 bar).

A first solution is to make the chamber strong enough to withstand a 0.2 bar pressure difference. Alternatively, the interior of the chamber could be pressurised to approximately the median pressure likely to be encountered, such as 1.1 bar; this would reduce the maximum pressure difference to which the chamber would be subjected to about 0.1 bar. However, the chamber may be subjected to a low pressure environment, for example if transported in an aircraft hold at 0.75 bar. In that case, pressurising the interior of the chamber would increase the pressure difference, for example from 0.25 to 0.35 bar.

A second solution is to seal the chamber in a vacuum. This overcomes the changes in pressure between the chamber and the external environment caused by heating or cooling the chamber, since there is effectively no gas within the chamber to expand or contract. Furthermore, this solution avoids ionisation within the chamber, as there is effectively no gas to ionise. However, this solution requires the chamber seal to be strong enough to maintain the vacuum.

A third solution is to allow the volume of the chamber to vary so as to reduce the pressure difference between the chamber and ambient pressure. In one specific embodiment, as mentioned above, the chamber may be closed by a resilient enclosure, such as a diaphragm which expands and contracts so as to equalise the pressure difference. The resilient enclosure may be internal to the appliance. In another specific embodiment, the chamber may be closed by a component sealed into the chamber by a sliding seal, such as an 'o' ring, such that the component moves into or out of the chamber so as to equalise the pressure. The component may be a heating element plate that forms an upper wall of the chamber and is slidably sealed against the wall of a liquid reservoir of the appliance. In another specific embodiment, the chamber includes an expansion vessel that may comprise a diaphragm sealed within the appliance or vented externally of the appliance. The expansion vessel may comprise a resilient enclosure, like a balloon. The expansion vessel may form part of an outer skirt of the appliance or part of the appliance base.

If the chamber is not ventilated, ionisation may build up within the chamber. However, ventilation may allow water ingress into the chamber. A fourth solution is to fill the sealed chamber with an inert gas. A fifth solution is to provide a ventilated membrane between the chamber and the exterior of the appliance, that allows pressure equalisation and ventilation but does not allow moisture ingress. The membrane may be made of a fluoropolymer fabric such as Gore-tex™. Alternatively, the membrane may be of a resilient material such as silicone having one or more small apertures such as holes or cross-cuts. Under normal conditions the resilient membrane is effectively water-tight but the apertures open when expanded under pressure. Alternatively, the aperture may be provided in a seal that seals against a component part, for example a part, such as a cordless contact member, a wire or a switch actuating member, that passes through an aperture in the membrane or seal. The aperture normally seals against the part, but opens to equalise the pressure when there is sufficient pressure difference across the seal, whether a positive or negative pressure difference. Alternatively, the seal may be designed so that its sealing face against a part of the appliance, such as a wall, opens under sufficient pressure difference in order to equalise the pressure; in other words, the seal reversibly fails when the pressure difference is above a threshold. These measures may be applied to any of the seals described above. However, there is a risk of water ingress through the aperture or ventilated membrane.

A sixth solution is to provide a valve that seals the chamber for washing of the appliance, but opens to ventilate the chamber during use. An example of this solution is the removable sealing plug or shutter disclosed above. Another example is an electrically operated valve that is opened automatically when the cordless appliance is placed on its power base, and closed automatically when the appliance is removed from the power base. The valve may be operated by a power supply within the appliance, so that the valve does not require power to be supplied from the power base in order to operate. The power supply may be rechargeable from the power base. The valve may be controlled by a humidity or water sensor within the chamber so that the valve opens when water ingress is sensed within the chamber.

Any of the above solutions could be incorporated in discrete electrical connector component, such as the Otter CP8 cordless connector. The discrete component may be designed to meet a predefined standard for waterproofing or pressure equalisation, so that when incorporated into an appliance that otherwise meets the standard, the component allows the appliance as a whole to meet the standard.

Additionally, venting and/or sealing features within the discrete connector component may cooperate with a corresponding cordless connector in the power base so that the component is sealed when removed from the power base connector but opens when connected to the power base connector. This solution provides an advantage over the valve disclosed in GB-A-2441628 in that the venting or sealing features are integrated within the connector component rather than being provided as a separate component. Any water ingress could be drained away through a drainage feature of the discrete connector component, such as the centre of the CP8 connector.

## Applications

The above-described embodiments may allow the appliance, such as a food processor or kettle jug, to be placed into a dishwasher for cleaning.

It will be appreciated that aspects of the invention may be used in many different domestic appliances. Examples include without limitation food processors, blenders, kettles, irons, wasserkochers, coffee and espresso makers, juicers, smoothie makers, pans, sauce makers, steamers, chocolate fountains, fondues, slow cookers and milk frothers.

## Heated Liquid Dispenser

A heated liquid dispenser will now be described, both as an appliance in which one or more of the above-described embodiments may be incorporated, and as a novel appliance *per se.* Aspects of the heated liquid dispenser comprise developments of the heated liquid dispenser disclosed in WO-A-07/096630; part of the description is included below as background.

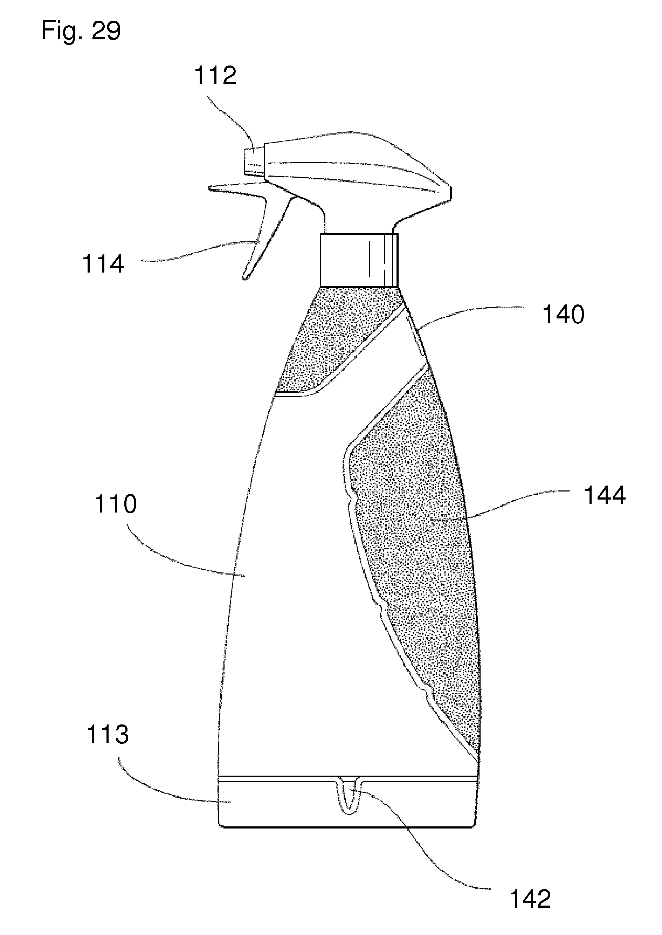

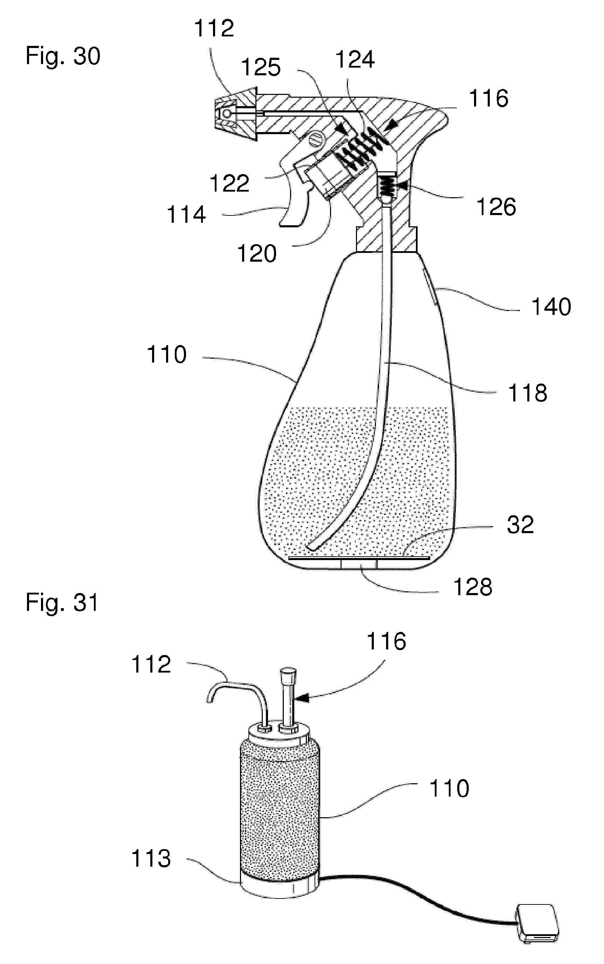

A first example, shown in Figures 29 and 30, comprises an electrically heated spray bottle having a reservoir 110, a nozzle 112 and a power base 113. The nozzle 112 is connected to a manually actuable trigger 114, a pump mechanism 116 and a tube 118. The trigger 114 actuates the pump mechanism 116. The pump mechanism 116 comprises a piston 120 housed within a cylinder 122. A spring 124 is also located in said cylinder 122. When a user pulls the trigger 114, the piston 120 is pushed into the cylinder 122 and hence compresses the spring 124. When the trigger 114 is released, the piston is pushed back into the cylinder 122 by action of the spring.

When the piston is pushed within the cylinder, fluid is forced out of the pump mechanism 116. When the trigger 114 is released, the piston 120 moves out of the cylinder 22 (while still being retained within the cylinder housing), thus causing fluid liquid from the reservoir 110 to be drawn up the tube 118.

The pump mechanism 116 further comprises two one-way valves 124, 126 - one located between the cylinder 122 and the reservoir 110, and one between the cylinder 122 and the nozzle 112. This ensures that the liquid drawn from the reservoir 110 is forced out of the nozzle 112 and cannot flow back into the reservoir 110.

The nozzle 112 is rotatable such that a user may select between a concentrated jet and a dispersed spray. Such nozzles are known on existing spray bottles, and will not be described in depth here.

A heating element such as a thick film element plate 32, is disposed in the base of the reservoir 110, together with a thermostat 128 to de-energise the element 32 when a predetermined temperature is reached. For example, the predetermined temperature may be 60°C, which is a suitable temperature for defrosting windscreens, or for use in cleaning operations using heated detergents for example. More generally, the predetermined temperature may be in the range 40° C to 70° C.

The heating element 32 may include a keep-warm element that is energised after the predetermined temperature is reached, so as to keep the liquid warm at a temperature below the predetermined temperature. Alternatively, the thermostat 128 may switch on the heating element 32 when the temperature of the liquid falls below a predetermined lower temperature.

There may also be provided an overheat control 130 for protecting the heating element 32 from overheating should the thermostat 128 fail. The overheat control 130 may switch off power to the heating element 32 when an overheat temperature significantly higher than the predetermined temperature is detected. The overheat temperature may be between 70°C and 90°C, and most preferably 80°C.

A temperature control suitable for use in this embodiment is described in GB-A-0329636, and shown in Figure 31. The control comprises first and second thermal actuators 128, 130. Said thermal actuators 128, 130 comprise bimetal discs that are operable to undergo a snap transformation. When each of the thermal actuators 128, 310, undergoes their snap transformation they are configured to cause the element 32 to be de-energised, and hence prevent the liquid within the reservoir 110 from being heated beyond a particular temperature.

In the present example, the first thermal actuator 128 is typically configured to undergo its snap transformation at the predetermined temperature, such as 60°C. The second thermal actuator 130 is configured to activate at the overheat temperature, for example 80°C.

The power base 113 is operable to provide power to the heating element 32 to heat the liquid in the reservoir 110 to a temperature below boiling. In one embodiment, the base 113 comprises a 360° electrical connector of the type described in, for example, EP-A-0 922 426. This arrangement is particularly advantageous in that the user may use the heated spray bottle without having to carry the weight of the power base 113.

In an alternative example, the thermostat 128 may be included within the power base 13, and may be connectable to a temperature sensor located within the reservoir portion.

A vent 140 is provided in a wall of the reservoir 110 to ensure that the pressure inside the reservoir 110 does not rise significantly due to the increase in the temperature of the contents of said reservoir 110. The vent 140 may be of any suitable configuration, such as an aperture in the wall of the reservoir 110, or a valve such as a slit valve or spring-loaded pressure relief valve.

The wall of the reservoir 110 may comprise a thermally insulated portion 144, so that a user may hold the reservoir 110 without discomfort when the liquid has reached the desired temperature. The thermally insulated portion 44 need only extend over a portion of the wall arranged for holding by the user. Alternatively, the entire wall may be thermally insulated, although this may add to the weight of the heated spray bottle.

Indication means, such as a light 142 (for example an LED), may be provided to indicate when the thermostat 128 has been activated, and hence when the temperature of the liquid contained in the reservoir 110 has been heated to the predetermined temperature limit.

Furthermore, it is preferred that the indication means 142 is located within the power base 113, as such arrangement allows for the reservoir portion of the apparatus to be easily washed in, for example, a dishwasher. Accordingly a washable connector, such as one that is described in GB 2387523 is preferable over a standard connector used on a typical electric jug.

This example provides advantages in providing more efficient cleaning when using detergents, and in an alternative use, is safer than using, for example, a kettle of boiling water when de-icing a car windscreen. It is more convenient and safer than having to heat water in a kettle and then pour the water into a spray bottle. It also uses less power, and does not use the chemicals present in conventional spray de-icers.

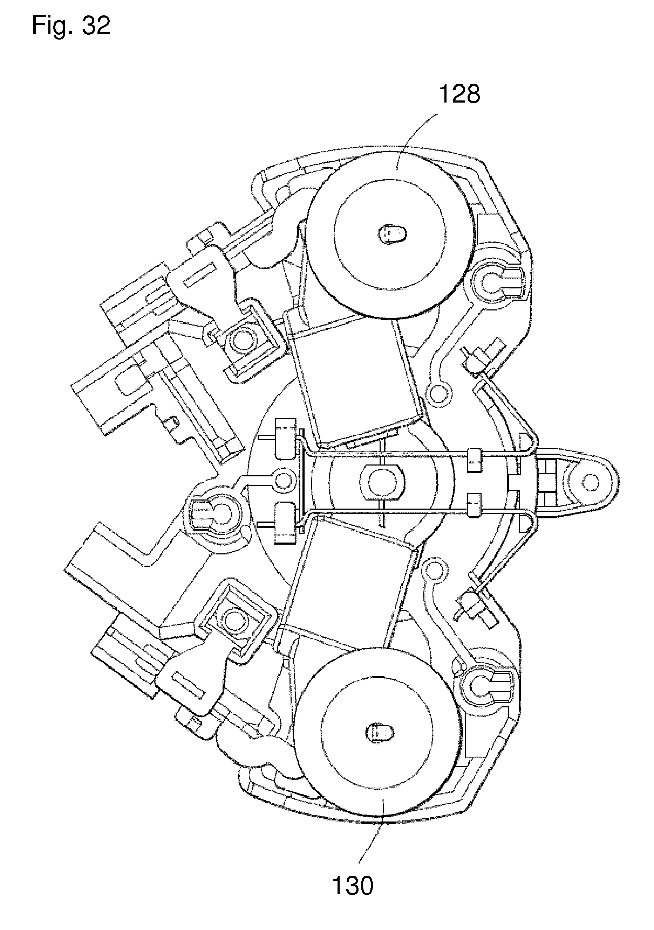

A second example comprises a heated sauce dispenser as shown diagrammatically in Figure 32. In this embodiment, liquid is dispensed through a tube 112 rather than a spray nozzle. Sauce or condiment may be heated within the reservoir 110 until the predetermined temperature is reached, and the sauce or condiment may then be dispensed at this temperature using the pump 116. The sauce or condiment may be kept warm using a keep warm heater as described above. The present example may be particularly useful in warming chocolate sauce.

In an alternative embodiment, the power base 113 comprises an induction heater and the heating element 32 comprises a plate that is inductively heated by the induction heater when the reservoir 110 is mounted on the power base 113.

Multipart Appliance

The main body of the liquid heating appliance disclosed in WO-A-07/096630 comprises two separable parts: a heated reservoir 110 and a dispensing part comprising the nozzle 112. The main body may be connected to a power base 113.

In an embodiment of the present invention, the main body of a heated liquid dispenser comprises at least three separable portions: a dispensing portion, a heating portion and an intermediate portion connectable between the heating portion and the dispensing portion. The heating portion contains a heating element 32, and optionally electrical components such as a thermal control and/or a cordless connector, and may or may not include the reservoir 110. The reservoir 110 may be defined by one or more of these portions, and may for example extend from the heating portion to the intermediate portion. Different sizes of intermediate portion may be used to allow the volume of the reservoir to be varied. A low profile appliance may comprise a heating portion not including the reservoir, and a low profile intermediate portion.

In an alternative embodiment, the order of connection of the portions may be different; for example, the heating portion may be connectable to the dispensing portion, and a reservoir portion may be connected to the dispensing portion or to the heating portion; all three portions may be connected together via a common single connector. All that is required is that the heating portion heat liquid in the reservoir before or during dispensing.

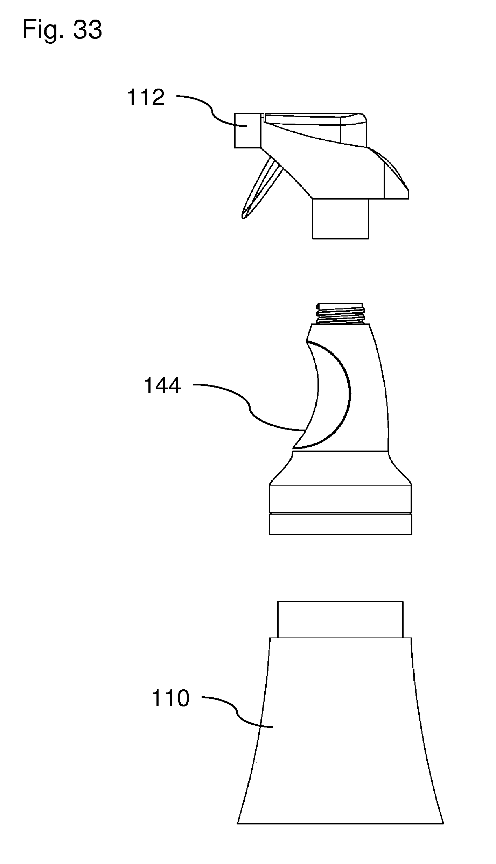

Specific embodiments are shown in Figures 33 to 35, which relate to improvements on the heated spray bottle of Figures 29 and 30. As shown in Figure 30, a tube 118 may be provided so that liquid is drawn from the bottom of the reservoir 110. The tube 118 may include a filter to prevent particles from entering the dispensing mechanism. The tube 118 may contain a non-return valve.

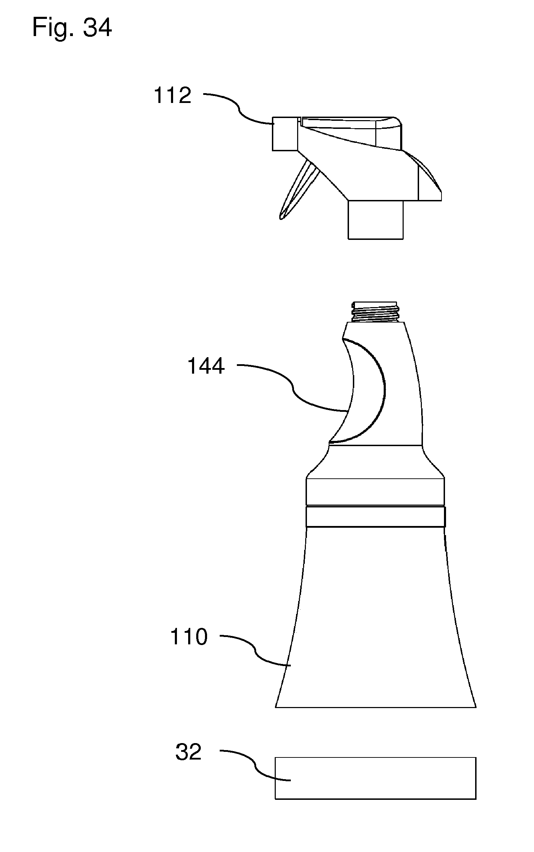

In the embodiment of Figure 33, the nozzle 112 is arranged on the dispensing portion, the intermediate portion comprises the thermally insulated handle portion 144 and the heating portion comprises the reservoir 110. In the embodiment of Figure 34, the nozzle 112 is arranged on the dispensing portion, the intermediate portion comprises the thermally insulated handle portion 144 and the reservoir 110, and the heating portion comprises the heating element 32; in other words, the heating element 32 forms a detachable floor for the reservoir 110.

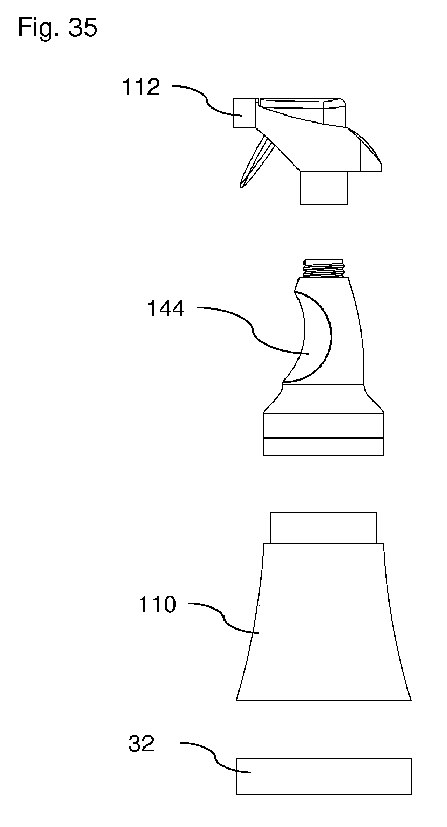

The embodiment of Figure 35 comprises four separable portions: a dispensing portion comprising the nozzle 112, a first intermediate portion comprising the thermally insulated handle portion 144, a second intermediate portion comprising the reservoir 110, and a heating portion comprising the heating element 32.

The different portions may be separably connectable by means of any suitable coupling, such as a screw or bayonet fitting. Where rotational alignment is required between the different portions, this may be facilitated or enforced by the coupling; for example, a bayonet coupling that allows coupling in only one rotational orientation.

An advantage of the division of the appliance into at least three separate portions is that the portions may be more easily cleaned. For example, at least one opening of a portion may be large enough to facilitate internal cleaning.

The heating portion may be washable in a dishwasher, for example using any of the means discussed above for rendering components dishwashable. Alternatively, the dispensing portion and/or the intermediate portion may be dishwashable, but the heating portion may be cleanable by wiping, to avoid ingress of water into electrical parts; this is particularly suitable for embodiments where the heating portion comprises a detachable floor of the reservoir 110, since the floor is easily accessible for wiping clean.

The intermediate portion and/or the dispensing portion may be disposable if too difficult to clean. In this way, at least part of the appliance, such as the heating portion, may be reused.

Alternatively, any one of the separate components could be fitted with a disposable sleeve, insert or liner containing a substance to be dispensed, so that the sleeve or insert can be disposed without requiring the separate component to be cleaned. The disposable sleeve, insert or liner may be provided pre-filled with the liquid to be dispensed, or as a separate consumable to be filled with the liquid by the user.

Another advantage is that each portion may be constructed so as to optimise the function thereof; for example, the intermediate portion may be constructed from a material that is thermally insulating and/or comfortable to hold, while the heating portion may be constructed of heat-resistant material. The heating portion may also be made of thermally insulating material, to reduce heat loss. The appliance may be suitable for use at table, for dispensing heated liquids, and may therefore have an insulated base to avoid damaging the table.

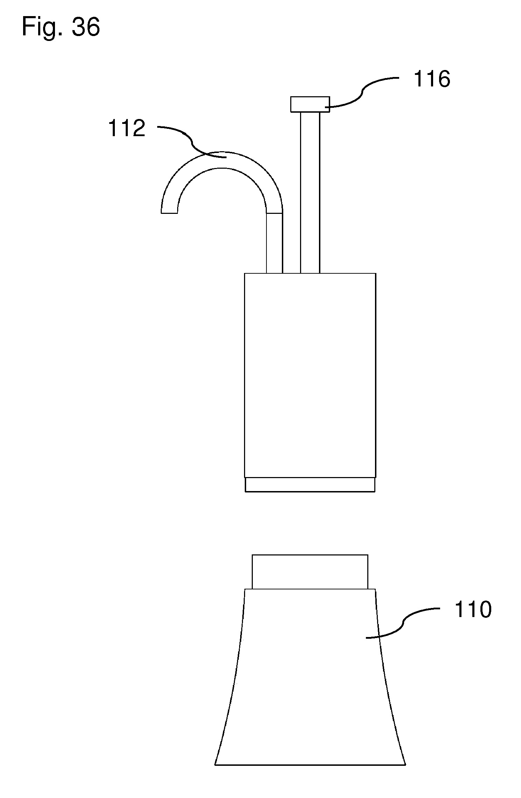

The heating portion may be interchangeably connectable to any one of a plurality of different portions, such as intermediate portions and/or dispensing portions. In the embodiment shown in Figure 36, a dispensing portion comprising a dispensing tube 112 and a pump 116 as in the example of Figure 32 is connectable to the reservoir portion 110 of the embodiment of Figure 33. The intermediate portion may function as an adapter to allow connection of a standard dispensing portion to the heating portion, or *vice versa.*

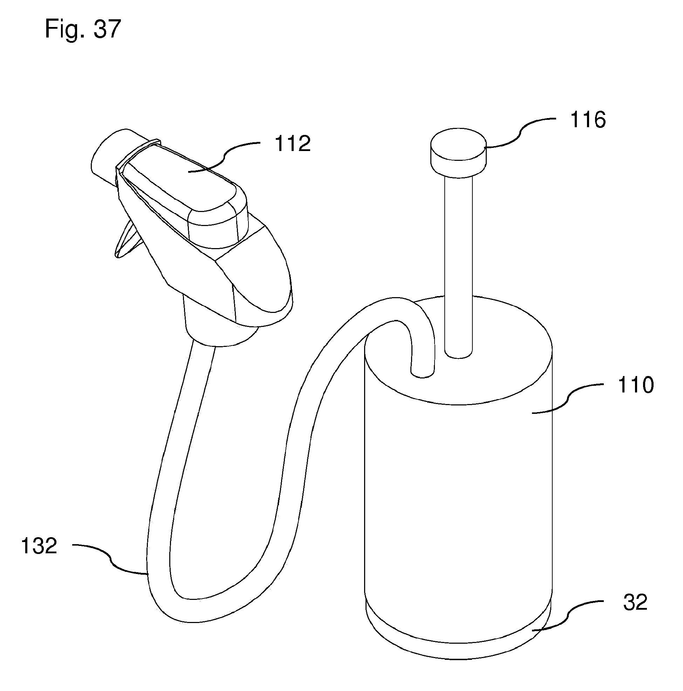

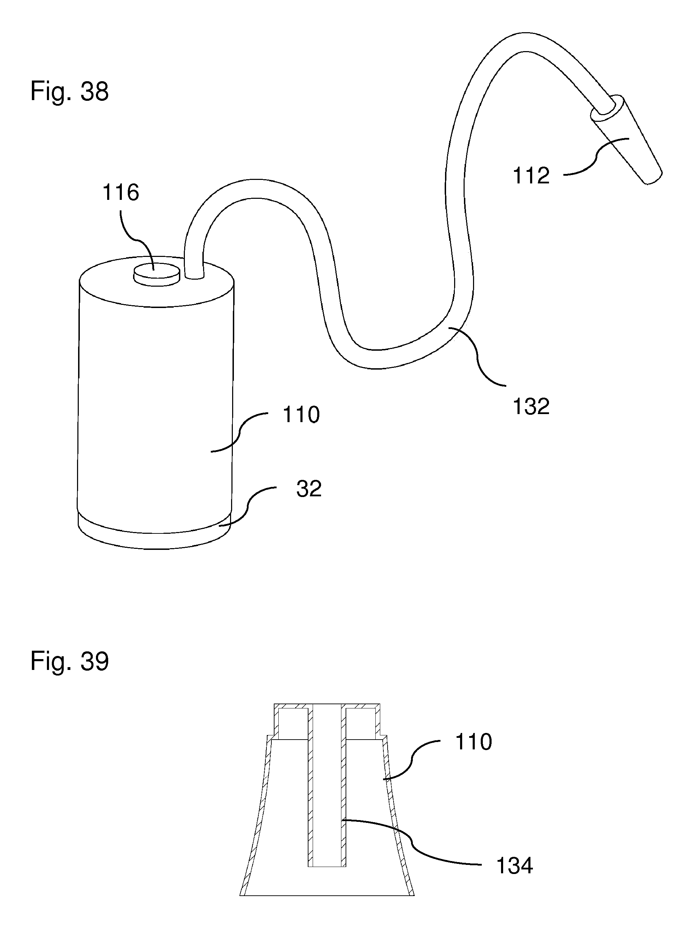

Alternative dispensing portions may be used, which may be interchangeably connectable to the intermediate portion and/or to the heating portion. In one embodiment, Figure 37 shows a dispensing portion having a pump 116 for pressurizing the reservoir 110, and a spray nozzle 112, connected to the reservoir 110 by a flexible conduit 132. The dispensing portion may include the reservoir 110 and may be removably connectable to a heating portion comprising a heating element 32. Figure 38 shows a variant having an electrically powered pump 116. The pump 116 may be powered by a power supply, such as a battery, enabling the pump to be used when the appliance is disconnected from the cordless power base.

The intermediate portion or dispensing portion containing a reservoir may be interchangeable so that different liquids may be dispensed in turn. For example, a reservoir 110 containing a first liquid may be detached from the heating portion and replaced by a reservoir 110 containing a second liquid. This is particularly advantageous for example when applying liquids of different types, such as different coloured paints or coatings, different colours or consistencies of icing, different cleaning fluids or different oils in aromatherapy, where contamination between the different liquids should be avoided. The reservoir 110 should be removable from the heating portion without spilling the contents thereof. One or more supports or housings may be provided for storage of interchangeable portions so that the liquid may be kept within those portions when removed from other portions. The supports or housings may each include a cover to prevent leakage or drying of the liquid contained within the respective portion.

The reservoir 110 may be fillable in an inverted position. In the embodiment of Figure 39, the reservoir 110 has an internal passage 134 depending downwardly from the upper opening of the reservoir 110, so that the reservoir 110 may be filled in an inverted position without the contents running out through the upper opening. The reservoir 110 may include level marking so that the volume of liquid contained therein in the inverted position may be judged.

Where the reservoir is formed by both the heating portion and intermediate portion, the reservoir 110 may be filled by assembling the heating portion and intermediate portion, filling the reservoir 110, and then attaching the dispensing portion.

Where the liquid comprises a two part mixture, one part of the mixture may be placed in the heating portion and the intermediate portion may then be connected to the heating portion. The other part of the mixture is then poured into the intermediate portion to the desired level. This allows the proportions of the parts of the mixture to be determined accurately.

The liquid or solid to be heated may be supplied in a pre-packed container that forms the intermediate portion and is assembled to the heating portion before use; this assembly may pierce the container or otherwise cause it to open so that the contents can be heated by the heating element 115.

Stirring/Agitation

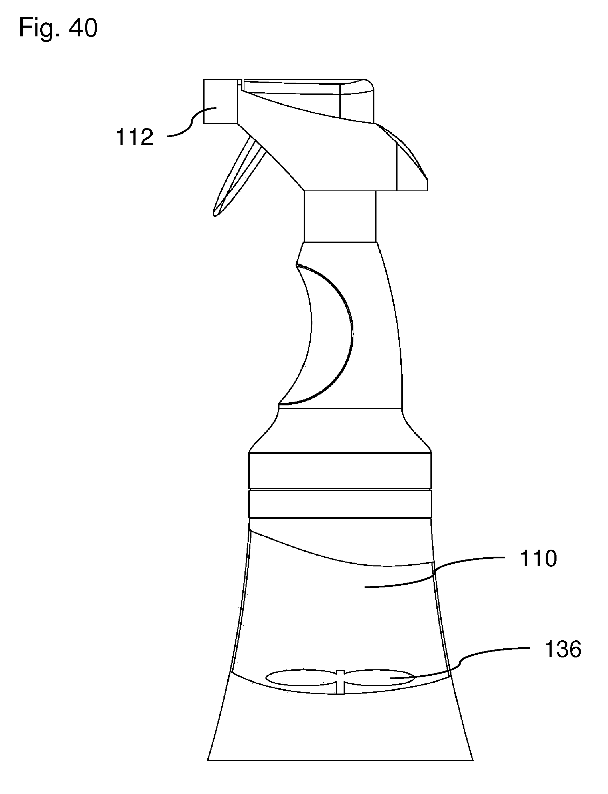

The heated liquid dispenser may include a stirrer 136 or other means for mixing the contents of the reservoir 110, for example to avoid separation or to promote emulsification of the contents. As shown in Figure 40, the stirrer 136 may be powered by a mechanical connection to a motor, or by a magnetic coupling. The motor may be powered by a power source within the appliance, such as a rechargeable battery or capacitor, so that the motor can be operated when the appliance is disconnected from a cordless power base. The motor and stirrer 136 may be provided as an integrated assembly, removably mountable on or within the appliance by the end user. Alternatively, the motor and stirrer may be provided as discrete components, one or both of which are removably mountable on or within the appliance by the end user.

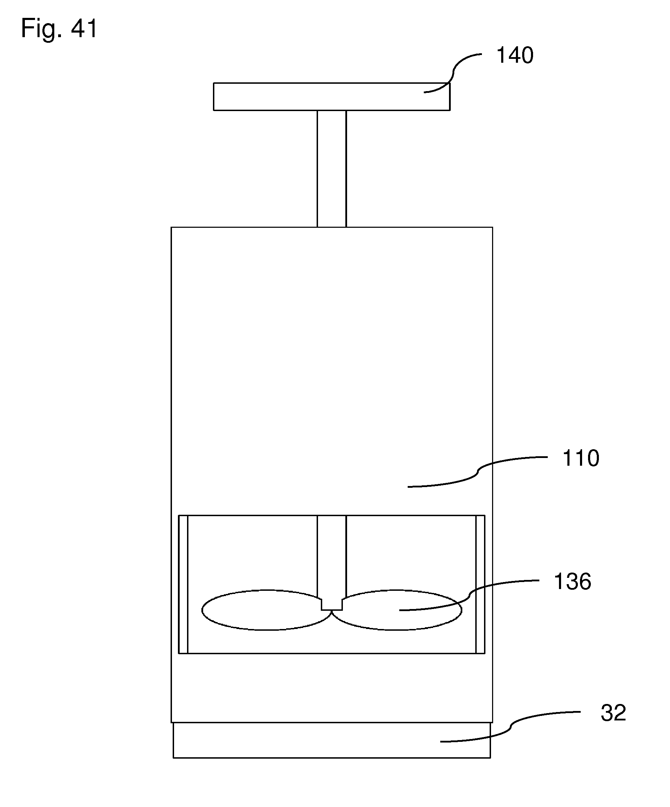

Alternatively, as shown in Figure 41, the stirrer 136 may be manually driven, for example by a handle 140. The stirrer 136 may be coupled to the manual actuation of the pump 116, so that the contents are stirred and dispensed by a single action.

The stirrer 136 may be driven from the bottom, top or side of the appliance, and the dispensing portion may be arranged accordingly. For example, the dispensing portion may be mounted on the side of or below the reservoir 110.

The stirrer 136 may be centrally mounted in the reservoir 110 or offset from the centre of the reservoir 110. The stirrer 136 may take any one of a variety of forms, such as a rotatably inner wall of the reservoir 110, optionally with one or more inward projections such as fins, to promote mixing of the contents. Instead of stirring the contents of the reservoir 110, the contents may be agitated for example by causing part or all of the reservoir, or a part within the reservoir, to vibrate or oscillate.

Melting/Liquefaction

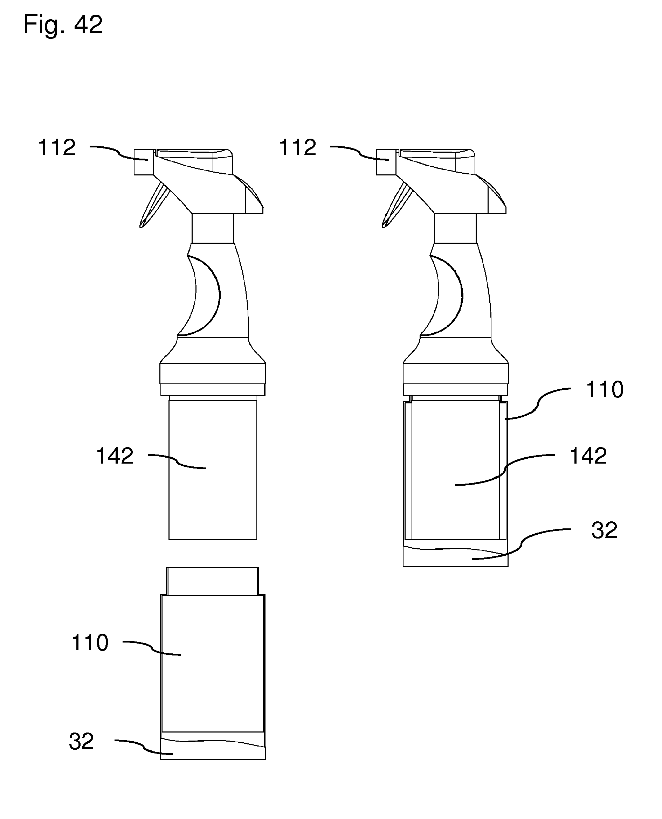

The substance to be dispensed may be viscous or a solid or gel at room temperature, but may become less viscous, liquefy or melt when heated by the heating element 32 so that it can be dispensed more easily; examples include glue or silicone sealant. As shown in Figure 42, the contents may be supplied as a refill 142 of standard size and/or shape that fits within the reservoir 110 and comes into contact with the heating element 32, such as a standard tube of silicone sealant, in which case a standard silicone gun-type dispenser may be used as the dispensing portion. Alternatively, the refill 142 may include a housing forming the intermediate portion connectable to the heating portion and the dispensing portion, the housing being disposable after use.

In an alternative embodiment of the invention, the substance to be dispensed is provided as a gel that liquefies when stirred or agitated. In that case, the appliance need not include a heater, but instead includes a stirrer or agitator as described above.

**Thermal Mass**

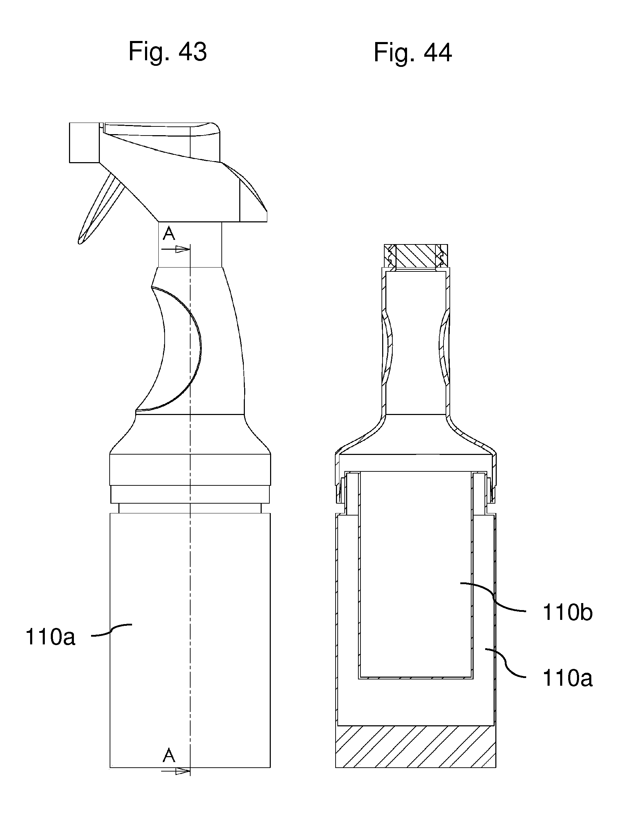

In another embodiment, shown in Figures 43 to 45, the reservoir 110 may comprise a first chamber 110a for containing liquid heated by the heating element 32 and a second chamber 110b for containing the liquid to be dispensed, heated by the liquid in the first chamber 110a. In the specific embodiment, the second chamber 110b is at least partially contained within the first chamber 110a, in the manner of a *bain marie,* but other arrangements may be used. The first chamber 110a may contain water and the second chamber 110b may contain a liquid that is sensitive to overheating, such as Hollandaise sauce or melted chocolate.

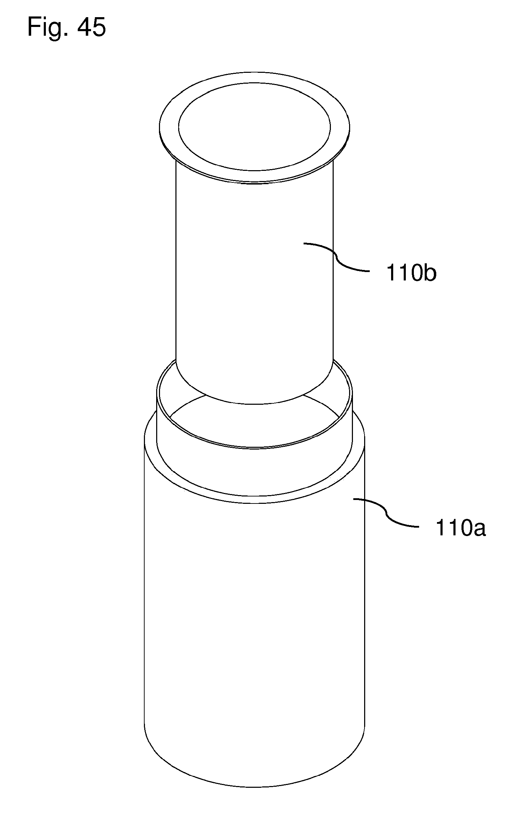

As shown in Figure 45, the second chamber 110b may be removable from the first chamber 110a for cleaning purposes or for other reasons as discussed below. The second chamber 110b may be separably attached to the dispensing portion, and may be removable from the first chamber 110a during a dispensing operation. In this way, the user need not lift the first chamber 110a and its contents during a dispensing operation, but may return the second chamber 110b with the dispensing portion to the first chamber 110a to reheat the contents of the second chamber 110b. In that case, the heating portion need not be provided with a cordless connector since the heating portion is not lifted by the user during a dispensing operation.

The first chamber 110a need not contain a liquid, but may instead comprise a solid thermal mass that is heated by the heater 32 and releases heat into the liquid to be dispensed. Instead of a thermal mass, a material may be used to exhibits a reversible exothermic reaction that absorbs heat from the heater 34 and releases heat into the liquid to be dispensed.

**Pressure Equalisation in Reservoir**

The vent 140 in the reservoir 110 may be sealed by a ventilated membrane that allows pressure equalisation when gas within the reservoir 110 is heated. The membrane may be made of a fluoropolymer fabric such as Gore-tex™. Alternatively, the membrane may be of a resilient material such as silicone having one or more small apertures such as holes or cross-cuts. Under normal conditions, the resilient membrane is effectively watertight but the apertures open when expanded under pressure.

Alternatively, the reservoir 110 may have a variable volume, such as by means of a piston or expansion chamber, so that the volume thereof increases as gas within the reservoir 110 is heated.

**Further features**

The dispensing portion may be arranged to dispense a predetermined quantity of liquid in response to a single user actuation, for example by the arrangement of the pump 116. The amount of liquid dispensed by a single user actuation, or the rate of dispensing, may be adjustable by the user.

The dispensing portion may include an interlock so that liquid cannot be dispensed unless above a first predetermined temperature and/or below a second predetermined temperature. The appliance may include a temperature indicator to indicate whether the temperature of the liquid contents is above a first predetermined temperature and/or below a second predetermined temperature. The temperature indicator may be thermochromic, electronic, electrical or mechanical.

The appliance may include means to show the user how long the liquid has been in the appliance, for example to advise if the constituents need remixing or are no longer fit for use. The means may comprise a timing mechanism, counter or indicator, such as a chemical indicator involving a slow reaction that changes colour or other discernible properties over a length of time.

The dispensing portion may include a ratchet type dispenser so that liquid is dispensed as the dispenser is progressively actuated, and the dispenser must then be reset.

The appliance may include means for illuminating certain portions for improved operation; for example, the area around or in front of the nozzle or tube 112 may be illuminated. The reservoir 110 may be illuminated internally, and/or may have a transparent or translucent wall or wall portion so that the contents can be easily seen, for example to judge the level or condition of the contents. The reservoir 110 may have visible level markings so that the volume of liquid present in the reservoir 110 can be easily determined by the user. In the case of a cordless appliance, the means for illuminating may be powered by a power supply contained within the body of the appliance so that illumination may be provided when the appliance body is disconnected from the cordless base. The power supply may comprise a rechargeable battery or capacitor that is recharged when the appliance body is connected to the power base. Alternatively, the power supply may comprise a non-rechargeable battery.

The appliance may be a cordless appliance connectable to a cordless power base, or may have a permanently connected power cord. The cordless base may be a 360° cordless base.

The reservoir 110 may be made of stainless steel, plastic, glass, or ceramic. The sides of the reservoir 110 may be parallel, concave or convex. The reservoir 110 may be rectangular or oval in horizontal cross-section for easier storage, or may be circular in cross-section. The reservoir may be double walled, with both walls of one material or made of two different materials. The double wall assembly could provide thermal insulation or the materials may be selected for a specific property. The thermal insulation may comprise a vacuum or thermally insulating material between the walls.

The heating element may be an underfloor element plate, an immersed element, or an element incorporated into or formed on a wall of the reservoir 110. The heating element may be a resistance heater, a self-regulating PTC heater, a trace heater, an ohmic heater, an induction heater, a radiant heater or an ultrasonic heater. The underfloor element plate may have a thick film, diecast or sheathed element. The thick film element may include overheat protection, such as the E-fast™ protection disclosed in WO-A-2006083162. The element plate may be laser-welded onto the base of the reservoir 110, for example as disclosed in WO-A-2007136256.

In an alternative embodiment, the heater may be a flow-through heater arranged to heat liquid as it is dispensed, rather than heating the contents of the reservoir before dispensing.

**Heated liquid dispensing applications**

Applications of the heated liquid dispenser in embodiments of the invention include: dispensing heated fragrances such as perfume or air freshener; dispensing heated detergent solution for improved cleaning, such as for ovens and/or barbeques; dispensing heated insecticide for greater efficacy; dispensing liquids that are solid or viscous at room temperature but dispensable when heated; applications that require two or more constituents to mix or react together before dispensing; dispensing heated glue or sealant, such as silicone sealant; dispensing paint; dispensing liquids comprising components that tend to separate; dispensing liquids that require heating, stirring or agitation to cause a reaction required to achieve a desired effect; dispensing liquid shoe polish; dispensing waterproofing treatment; dispensing wax polish for cars and the like; dispensing cleaning fluid for example for alloy wheels; dispensing heated cooking oil for improved coverage; dispensing warm water for hairdressing applications; and dispensing heated massage or aromatherapy oil.

**Alternative Embodiments**

The above specific embodiments are described by way of reference only, and that many modifications and variations are possible within the scope of the enclosed claims.

**Further Statements of Invention**

Additional statements of invention are recited in the numbered clauses below.

1. A heated liquid dispenser comprising a liquid heating portion including liquid heating means, a dispensing portion and a further portion, the portions being removably connectable together.

2. The dispenser of clause 1, wherein the further portion is connectable between the heating portion and the dispensing portion.

3. The dispenser of clause 1 or clause 2, having a liquid reservoir defined by one or more of said portions.

4. The dispenser of clause 3, wherein the heating portion comprises a floor of the reservoir.

5. The dispenser of any one of clauses 1 to 4, wherein the further portion comprises first and second further portions removably connectable together.

6. The dispenser of any one of clauses 3 to 5, wherein a part of the volume of the reservoir is contained within each of the heating portion and the further portion.

7. The dispenser of any preceding clause, wherein one or more of said portions are connectable together so as to align said portions in a predetermined alignment.

8. The dispenser of any one of clauses 1 to 7, wherein at least one of the portions comprises a thermally insulating material or means.

9. The dispenser of any preceding clause, comprising a plurality of interchangeable said portions.

10. The dispenser of any preceding clause, wherein the further portion is disposable.

11. The dispenser of any preceding clause, wherein the dispensing portion is disposable.

12. A heated liquid dispenser comprising a reservoir, heating means operable to heat the contents of the reservoir, and dispensing means for dispensing the contents of the reservoir, wherein a plurality of different said dispensing means are removably connectable to the reservoir or to the heating means.

13. A heated liquid dispenser comprising a plurality of interchangeable reservoir portions, heating means operable to heat the contents of any one of said reservoir portions, and dispensing means for dispensing the contents of said one reservoir portion.

14. The dispenser of clause 12 or 13, including a support or housing for said plurality of interchangeable portions.

15. A heated liquid dispenser comprising a reservoir, heating means operable to heat the contents of the reservoir, and dispensing means for dispensing the contents of the reservoir, wherein the reservoir includes a disposable container for the contents of the reservoir.

16. A heated liquid dispenser comprising a reservoir, heating means operable to heat the contents of the reservoir, and dispensing means for dispensing the contents of the reservoir, wherein the dispensing means includes a flexible conduit.

17. A heated liquid dispenser comprising a reservoir, heating means operable to heat the contents of the reservoir, and dispensing means for dispensing the contents of the reservoir, wherein the reservoir is fillable when inverted.

18. A heated liquid dispenser comprising a reservoir, heating means operable to heat the contents of the reservoir, and electrically powered dispensing means for dispensing the contents of the reservoir.

19. The dispenser of clause 18, electrically connected or connectable to a cordless power base, and including an electrical power source for providing power to the dispensing means when the dispenser is disconnected from the power base.

20. A heated liquid dispenser comprising a reservoir, heating means operable to heat the contents of the reservoir, dispensing means for dispensing the contents of the reservoir, and means for stirring or agitating the contents of the reservoir.

21. The dispenser of clause 20, wherein the stirring or agitating means is drivable by a motor.

22. The dispenser of clause 21, wherein the motor is mechanically coupled to a stirrer within the reservoir.

23. The dispenser of clause 22, wherein the motor and stirrer are integrated in an assembly removably mountable in or on the appliance

24. The dispenser of clause 22, wherein one or both of the motor and stirrer are removably mountable in or on the dispenser.

25. The dispenser of clause 21, wherein the motor is magnetically coupled to a stirrer within the reservoir.

26. The dispenser of clause 20, wherein the stirring or agitating means is manually drivable.

27. The dispenser of any one of clauses 20 to 26, electrically connected or connectable to a cordless power base, and including an electrical power source for providing power to the stirring or agitating means when the dispenser is disconnected from the power base.

28. A liquid dispenser comprising a reservoir, means for stirring or agitating the contents of the reservoir, and means for dispensing the contents of the reservoir.

29. A heated liquid dispenser comprising a reservoir, heating means operable to heat the contents of the reservoir, and dispensing means for dispensing the contents of the reservoir, wherein the heating means comprises a heater and heat transfer means arranged to absorb heat from the heater and release heat to the contents of the reservoir.

30. The dispenser of clause 29, wherein the heat transfer means comprises a thermal mass.

31. The dispenser of clause 30, wherein the thermal mass comprises a liquid chamber for containing liquid heated by the heater.

32. The dispenser of clause 29, wherein the heat transfer means comprises material for undergoing a reversible exothermic reaction.

33. A heated liquid dispenser comprising a reservoir, heating means operable to heat the contents of the reservoir, and dispensing means for dispensing the contents of the reservoir, the reservoir having a ventilated membrane for equalising pressure in the reservoir.

34. A heated liquid dispenser comprising a reservoir, heating means operable to heat the contents of the reservoir, and dispensing means for dispensing the contents of the reservoir, the reservoir having a variable volume for equalising pressure in the reservoir.

35. The dispenser of any preceding clause, arranged to dispense a predetermined quantity of liquid in response to a single user actuation.

36. The dispenser of clause 30, wherein said quantity is adjustable by the user.

37. The dispenser of any preceding clause, wherein the rate of dispensing is adjustable by the user.

38. The dispenser of any preceding clause, arranged so that dispensing is inhibited unless the liquid meets a predetermined temperature criterion.

39. The dispenser of any preceding clause, including a temperature indicator responsive to the temperature of liquid within the reservoir.

40. The dispenser of any preceding clause, wherein the dispensing means comprises a ratchet type dispenser.

41. The dispenser of any preceding clause, including means for illuminating a part of the dispenser.

42. The dispenser of any preceding clause, including means for illuminating an area to which the liquid is dispensed.

43. The dispenser of clause 41 or 42 having a cordless power connector, the means for illuminating being operable when the power connector is disconnected.

44. The dispenser of any preceding clause, having a cordless power connector.

45. The dispenser of any preceding clause, wherein the heating means comprises an underfloor element plate.

46. The dispenser of clause 45, wherein the element plate comprises a thick film element.

47. The dispenser of any one of clauses 1 to 44, wherein the heating means is arranged to heat a side wall of the reservoir.

48. The dispenser of any preceding clause, including means for indicating the duration for which the liquid has been within the reservoir.

49. The dispenser of any preceding clause, wherein the reservoir is double walled.

50. The dispenser of clause 49, including a vacuum or thermally insulating material between the double wall.

51. A washable electrical appliance, or part thereof, having at least one electrical component sealed within a chamber substantially to prevent the ingress of water into the chamber during washing, wherein the chamber is able to withstand a pressure difference between the inside and the outside of the chamber caused by heating of the chamber associated with washing of the appliance.

52. A washable electrical appliance, or part thereof, having at least one electrical component sealed within a chamber substantially to prevent the ingress of water into the chamber during washing, wherein the chamber has an internal vacuum.

53. A washable electrical appliance, or part thereof, having at least one electrical component sealed within a chamber substantially to prevent the ingress of water into the chamber during washing, wherein the chamber is filled with an inert gas.

54. A washable electrical appliance, or part thereof, having at least one electrical component sealed within a chamber substantially to prevent the ingress of water into the chamber during washing, wherein the interior of the chamber is sealed at a pressure elevated above normal atmospheric pressure.

55. A washable electrical appliance, or part thereof, having at least one electrical component sealed within a chamber substantially to prevent the ingress of water into the chamber during washing, wherein the volume of the chamber is variable so as to tend to equalise a pressure difference between the interior and the exterior of the chamber.

56. The appliance or part of clause 55, wherein the chamber is sealed by a sliding seal.

57. The appliance or part of clause 55, wherein the chamber is sealed by a resilient enclosure.

58. The appliance of clause 55, wherein the chamber includes an expansion vessel.

59. A washable electrical appliance, or part thereof, having at least one electrical component within a chamber arranged substantially to prevent the ingress of water into the chamber during washing, wherein the chamber includes a member arranged to allow gas exchange between the interior and exterior of the chamber while substantially preventing ingress of water during washing.

60. The appliance of clause 59, wherein the member comprises a membrane.

61. The appliance or part of clause 60, wherein the membrane is a porous fabric.

62. The appliance or part of clause 61, wherein the fabric comprises a fluoropolymer.

63. The appliance or part of clause 59 or 60, wherein the member is resilient and comprises at least one aperture arranged to open under a differential pressure.

64. The appliance or part of any one of clauses 59 to 63, wherein the member comprises a seal arranged to open under a differential pressure.

65. The part of a washable electrical appliance of any one of clauses 59 to 64, comprising a discrete cordless electrical connector component.

66. A cordless electrical connector for a washable electrical appliance, comprising means for selectively providing an opening to the interior of the appliance.

67. The connector of clause 66, wherein the means is arranged to provide said opening when in contact with a cordless power base.

68. The connector of clause 66, wherein the means is arranged to provide said opening when in contact with a cordless power base connector.

69. A washable electrical appliance, or part thereof, having at least one electrical component sealed within a chamber substantially to prevent the ingress of water into the chamber during washing, wherein the chamber includes a valve that seals the chamber during washing of the appliance or part.

70. The appliance or part of clause 69, wherein the valve is an electrically operated valve.

71. A washable electrical appliance having a housing with a discrete component inserted therein, the component being sealed against the housing by a seal compressed in the direction of insertion of the component into the housing.

72. The appliance of clause 71, wherein the component and the housing have respective portions projecting in a direction transverse to the direction of insertion, the seal being compressed between the projecting portions.

73. The appliance of clause 72, wherein the respective portions extend at an angle to the direction of insertion.

74. The appliance of any one of clauses 71 to 73, including means for retaining the component within the housing.

75. The appliance of clause 74, wherein the retaining means is arranged to compress the seal in the direction of insertion of the component.

76. The appliance of clause 75, wherein the retaining means comprises at least one of a screw, a clip, a threaded retaining member, a moveable engaging member and a bayonet fitting.

77. A method of assembling a component into a housing of a washable electrical appliance, the method comprising inserting the component into the housing in a direction defined by the complementary arrangements of the component and the housing, such as to compress a seal between the component and the housing in the direction of insertion.

78. A washable electrical appliance having a housing with a discrete component inserted therein, the component being sealed against the housing by a seal compressed perpendicularly to the direction of insertion of the component into the housing, the seal being integrally formed on the component or on the housing.

79. The appliance of clause 78, wherein the seal is a twin-shot seal.

80. A washable electrical appliance having a housing with a discrete component inserted therein, the component being sealed against the housing by means of an interference fit.

81. The appliance of clause 80, wherein the component and the housing include respective tapered surfaces forming an interference fit therebetween.

82. A washable electrical appliance having a housing with a discrete component assembled therein, the component including part of the external surface of the appliance, the component being sealed against the housing by a seal having a one or more elongate portions extending between the component and the housing.

83. The appliance of clause 82, wherein the seal is mounted on the component.

84. The appliance of clause 82 or clause 83, wherein the seal has a plurality of said elongate portions, extending in mutually different directions.

85. A washable electrical appliance having a housing with a discrete component assembled therein, the component being sealed against the housing by a sealing member that retains the component against the housing.

86. The appliance of clause 85, wherein the seal is mounted on one of the component and the housing, and the other of the component and the housing includes means for engaging the seal.

87. The appliance of clause 85, wherein both the component and the housing include means for engaging the seal.

88. The appliance of clause 85, wherein the seal is a grommet seal.

89. A washable electrical appliance having a housing with an external discrete component assembled therein and forming part of the external surface of the appliance, and an internal discrete component assembled therein and not forming part of the external surface of the appliance, the external component being sealed against the housing by a sealing member that also provides a seal around the internal component.

90. The appliance of clause 89, wherein the internal component comprises a floor of an internal reservoir, and the external component comprises a base portion of the appliance.

91. A method of sealing a component within a housing of a washable electrical appliance, the component and the housing having complementary formations that form a sealant channel when assembled together, the method comprising introducing sealant into the sealant channel and setting the sealant so as to form a seal between the housing and the component.

92. The method of clause 91, wherein the channel includes means for retaining the seal between the component and the housing.

93. A method of sealing a component within a housing of a washable electrical appliance, the component including part of the external surface of the appliance, one of the component and the housing having a sealant channel and the other having a formation for location in the sealant channel, the method comprising sealing the formation within the channel by means of a sealant.

94. A method of assembling a washable electrical appliance, comprising assembling and sealing together a discrete internal component and a discrete external component together with a housing of the appliance by means of a common sealant portion.

95. The method of clause 94, wherein the internal component comprises a floor of an internal reservoir, and the external component comprises a base portion of the appliance.

96. The method of clause 94 or clause 95, wherein the internal component has a peripheral channel into which the housing and the external component are assembled, the method including introducing the sealant into the peripheral channel.

97. A washable electrical appliance having a main housing and a discretely formed housing component attached to the main housing, wherein end surfaces of the main housing and the housing component are mutually abutting and an internal portion of one of the housing component and the main housing extends into the other one of the housing component and the main housing and seals against the other one of the housing component and the main housing.

98. A washable electrical appliance having a main housing and a discretely formed housing component attached to the main housing, wherein edge portions of the main housing and the housing component comprise complementary serrations engaged with one another.

99. The appliance of clause 98, wherein one of the complementary serrations comprises a seal.

100. A method of assembling a component into a housing of a washable electrical appliance, the component and the housing having complementary formations, the method comprising welding said complementary formations together.

101. A method of retaining a component in a housing of a washable electrical appliance, the method comprising sliding a clip in a direction substantially parallel to the internal surface of the housing, to engage portions of the component and of the internal surface of the housing.

102. A washable electrical appliance having a user actuable switch for controlling an electrical function of the appliance, the switch being sealed within the appliance by a flexible sealing member such that the switch is actuable through the flexible sealing member.

103. A washable electrical appliance having a first moveable member actuable externally of the appliance and a second moveable member sealed within the appliance, the second member being actuable by the first member through a flexible sealing member.

104. A washable electrical appliance having a first moveable member actuable externally of the appliance and a second moveable member sealed within the appliance, the second member being actuable by the first member through a magnetic link.

105. A washable electrical appliance having a moveable member actuable externally of the appliance and a component sealed within the appliance, the component being actuable by the first member through a magnetically actuated switch.

106. A washable electrical appliance having a compartment including an internal seal that substantially fills available space within the compartment.

107. The appliance of clause 106, wherein the internal seal is preformed to fit the available space.

108. The appliance of clause 106, wherein the internal seal is formed by substantially filling the available space with sealant.

109. The appliance of clause 108, wherein the sealant is a foam sealant.

110. The appliance of any one of clauses 51 to 76, 78 to 90, 97 to 99 and 102 to 109, comprising a heated liquid dispenser according to any one of clauses 1 to 46.

111. The method of any one of clauses 77, 91 to 96 and 100 to 101, wherein the appliance is heated liquid dispenser according to any one of clauses 1 to 46.

112. An internal component for washable electrical appliance, having a sealing cover or enclosure applied thereto.

**Claims**

1. A washable electrical appliance having a housing (2) with a cordless connector (1) assembled therein, the cordless connector (1) being sealed against the housing by a seal (12) having a one or more elongate portions (15) extending between the cordless connector (1) and the housing (2).

2. The appliance of claim 1, wherein the cordless connector includes part of the external surface of the appliance.

3. The appliance of claim 1 or 2, wherein the cordless connector (1) is a waterproof or washproof cordless connector to allow the appliance and/or the detachable part of the appliance to be washed in a dishwasher, immersed in water or otherwise easily cleaned.

4. The appliance of any preceding claim, wherein the seal (12) is mounted on the cordless connector (1) or on the housing (2).

5. The appliance of any preceding claim, wherein seal (12) is arranged between a side wall (13) of the housing (2) and a side wall (14) of the cordless connector (1).

6. The appliance of any preceding claim, wherein the seal has a plurality of said elongate portions (15), extending in mutually different directions.

7. The appliance of any preceding claim, wherein the one or more elongate portions (15) of said seal (12) deforms to take the shape of the wall (13) of the housing (2) or the wall (14) of the cordless connector (1).

8. The appliance of any preceding claim, wherein the or each elongate portion (15) comprises a relatively thin, resilient portion extending radially.

9. The appliance of any preceding claim, wherein the seal (12) is retained in an axial direction between an inwardly projecting lip (16) at a lower end of the housing (2) and an outwardly projecting rim (17) on the cordless connector (1).

10. The appliance of any preceding claim, wherein the cordless connector (1) comprises an upper end, and a lower end defined by an aperture into which a corresponding electrical connector fits.

11. The appliance of claim 10, wherein the upper end of the cordless connector comprises an upper wall (7), within which are located at least two electrical conductors (3; 5; 6).

12. The appliance of claim 11, wherein said at least two electrical conductors (3; 5; 6) are earth, live and/or neutral electrical conductors.

13. The appliance of claim 11 or 12, wherein said electrical conductors are (3; 5; 6) sealed within the upper wall by liquid tight sealing means (11), arranged to prevent ingress of water from the lower end of the appliance.

14. The appliance of any preceding claim, wherein the cordless connector (1) is a 360° cordless connector.

15. The appliance of any preceding claim, wherein the appliance is a heated liquid dispenser comprising a liquid heating portion (110) including an electric heater (32), a dispensing portion and a further portion, whereby the liquid heating, dispensing and further portions are each removably connectable together.

Fig. 1

Fig. 1a

## Fig 1b

19, 20

## Fig 1c

15    14

Fig 1d

15

Fig. 1e

13

17

12

18

Fig. 2

Fig. 3

Fig. 4

Fig. 5a

Fig. 5b

17a

12

17b

16

Fig. 5c

17

12

16

21

Fig. 6

13

12    14

Fig. 7

16

12

17

Fig. 8

17

16

12

Fig 9

22

17

16

Fig. 10

Fig. 11a

Fig. 11b

Fig 12

Fig. 13a

Fig. 13b

Fig. 14

17

12

16

14

28

Fig. 15a

29

12

17a

17b

16

Fig. 15b

16

29

Fig. 16

Fig. 17

Fig. 18

Fig. 19

Fig. 20

13

34

12a

14

12b

12c

Fig. 21

13

12

17

14a

Fig. 22a

Fig. 22b

Fig. 23

Fig. 24

13

14

Fig. 25

13

14a

12

Fig. 26

13

13a

32

14a

14

12

Fig. 27a

13a

14a

Fig. 27b

14a

12

Fig. 28a

14a

31    36

37

Fig. 28b

37

14a

31    36

Fig. 29

Fig. 30

Fig. 31

Fig. 32

128

130

Fig. 33

112

144

110

Fig. 34

## Fig. 35

Fig. 36

Fig. 37

Fig. 38

Fig. 39

Fig. 40

112

110

136

Fig. 41

140

110

136

32

Fig. 42

112

112

110

142

142

32

110

32

Fig. 43                     Fig. 44

110a

110b

110a

Fig. 45

110b

110a

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9406185 A
- WO 08012506 A1
- GB 2441628 A
- WO 07096630 A
- GB 2228634 A
- EP 1312290 A
- GB 2334822 A
- GB 0329636 A
- EP 0922426 A
- GB 2387523 A
- WO 2006083162 A
- WO 2007136256 A